# EUROPÄISCHE PATENTSCHRIFT

(11) **EP 3 500 843 B1**
(45) Veröffentlichungstag und Bekanntmachung des Hinweises auf die Patenterteilung: **15.06.2022**
(21) Anmeldenummer: 17746503.6
(22) Anmeldetag: 03.08.2017
(51) Int. Cl.: G01N 22/00, G01B 15/00

(54) **VERFAHREN ZUM ERKENNEN VON ABLAGERUNGEN IN EINEM ROHRSYSTEM EINES APPARATS**
METHOD FOR DETECTING DEPOSITS IN A PIPE SYSTEM OF AN APPARATUS
PROCEDE DE RECONNAISSANCE DE DEPOTS DANS UN SYSTEME DE TUYAUTERIE D'UN APPAREIL

(30) Priorität: 22.08.2016 EP 16185180
(43) Veröffentlichungstag der Anmeldung: 26.06.2019
(73) Patentinhaber: BASF SE, 67056 Ludwigshafen (DE)
(72) Erfinder: WATERS, Gerrit, 67056 Ludwigshafen (DE); HENNIG, Ingolf, 67056 Ludwigshafen (DE); WAGLOEHNER, Steffen, 67056 Ludwigshafen (DE); JENNE, Eric, 67056 Ludwigshafen (DE); LAIB, Heinrich, 67056 Ludwigshafen (DE)
(86) Internationale Anmeldenummer: PCT/EP2017/069645
(87) Internationale Veröffentlichungsnummer: WO 2018/036781

(56) Entgegenhaltungen:
- EP-A1- 2 365 302
- EP-A1- 2 561 339
- EP-A1- 2 919 042
- EP-A2- 0 821 431
- WO-A1-00/46545
- GB-A- 2 479 741
- JP-A- 2003 307 502
- JP-B2- 3 400 255
- RU-C1- 2 052 796
- US-A1- 2007 024 505
- US-A1- 2015 123 688
- US-A1- 2015 316 402

## Beschreibung

Die Erfindung betrifft ein Verfahren zum Erkennen von Ablagerungen in einem Rohrsystem eines Apparats bei dem Mikrowellenstrahlung in das Rohrsystem eingekoppelt wird.

Bei der Durchführung vieler chemischer Verfahren und Prozesse entstehen in den dabei verwendeten Apparaten unerwünschte Ablagerungen. Die Ablagerungen beeinträchtigen das durchgeführte Verfahren bzw. den Prozess und können je nach Zusammensetzung und Situation ein Sicherheitsproblem darstellen. Ein Beispiel ist das Steamcracken, bei dem Ethylen und Propylen durch thermisches Cracken längerkettiger Kohlenwasserstoffe wie beispielsweise Naphtha oder Ethan gewonnen werden. Das Verfahren wird in einem Rohrreaktor durchgeführt, wobei das Rohr typischerweise einen Innendurchmesser von 80 mm bis 120 mm und eine Länge von 50 m bis 200 m aufweist. Für das Durchführen des Crackens wird das Rohr über einen Ofen beheizt. Der Prozess läuft bei einer Temperatur von bis zu 1050 °C bei einem leicht erhöhten Druck im Bereich von 2 bis 3 bar ab, wobei der Partialdruck der einzelnen Reaktionsteilnehmer durch das Zugeben von Dampf erniedrigt wird. Nach dem Cracken wird das Gas schlagartig auf eine Temperatur unterhalb von 300 °C abgekühlt. Obwohl die Reaktionsbedingungen durch jahrelange Erfahrung stetig optimiert wurden, lagern sich kohlenstoffhaltige Stoffe in Form von Verkokungen an den Innenwänden der Rohre ab. Diese Verkokungen bilden eine feste Schicht auf den Innenwänden der Rohre aus und können eine Dicke im Bereich von mehreren cm erreichen. Dabei treten die Verkokungen nicht gleichmäßig über das Rohrsystem auf, sondern können insbesondere bei variierenden Prozessbedingungen, beispielsweise aufgrund von Temperaturschwankungen aufgrund der Ausgestaltung des Ofens, ungleichmäßig über das Rohr verteilt sein.

Verkokungen in einem Rohrsystem sind problematisch, da diese nicht nur zu Blockaden führen können, sondern auch eine thermische Isolierung zwischen der Rohrinnenwand und dem im Rohr geführten kühleren Strom (speziell bei endothermer Reaktion) darstellen. Neben einer ungleichmäßigen Wärmeübertragung auf den im Rohr geführten Strom kann es auch zu einer lokalen Überhitzung des Rohrs kommen, wodurch das Rohr geschädigt werden kann. Des Weiteren stellen die Ablagerungen aufgrund eines von dem Rohr unterschiedlichen Wärmeausdehnungskoeffizienten ein Problem beim Herunterfahren des Reaktors dar. Beim Abkühlen können mechanische Spannungen auftreten, die das Rohr schädigen.

Es ist daher im Stand der Technik üblich, in vorgegebenen Intervallen den Produktionsablauf zu unterbrechen und Verkokungen durch Oxidation zu entfernen. Hierbei ist problematisch, dass der genaue Zustand des Rohrsystems und damit die Menge und Position der Verkokungen im Rohrsystem nicht bekannt sind.

Im Stand der Technik sind Verfahren bekannt, mit denen Ablagerungen im Inneren eines Apparats gemessen werden können.

Aus WO 2014/173889 ist ein Verfahren und eine Vorrichtung zum Messen von Ablagerungen im Inneren eines Apparats unter Verwendung von Mikrowellenstrahlung bekannt. Dabei wird ein Mikrowellenresonator in den Apparat eingebracht und es wird eine Resonanzfrequenz des Mikrowellenresonators bestimmt. Bei dem Apparat kann es sich beispielsweise um eine Kolonne, einen Wärmetauscher oder um einen Reaktor handeln. Sofern der Apparat selbst einen für die Verwendung als Mikrowellenresonator geeigneten Durchmesser aufweist, kann auch der Apparat selbst als Mikrowellenresonator verwendet werden. Für die Messung wird Mikrowellenstrahlung in den Resonator eingebracht und die Resonanzfrequenz und/oder die Güte einer Resonanz des Mikrowellenresonators bestimmt. Aus einer Veränderung der Resonanzfrequenz und/oder der Güte der Resonanz wird im Anschluss auf die Menge und/oder die Art der Ablagerungen im Inneren des Apparats geschlossen.

Nachteilig an dem Verfahren ist, dass entweder der Apparat selbst eine für die Verwendung als Mikrowellenresonator geeignete Geometrie aufweisen muss, oder dass zusätzliche Mikrowellenresonatoren in den Apparat eingebracht werden müssen. Wird der Apparat selbst als Resonator verwendet, so werden zudem nur über das gesamte Volumen gemittelte Angaben erhalten, so dass ein Rückschluss auf die Verteilung der Ablagerungen im Apparat nicht möglich ist.

Aus US 6,909,669 B1 sind eine Vorrichtung und ein Verfahren zum Erkennen von Unterspülungen in Sedimenten bekannt. Die Vorrichtung umfasst eine Sonde, die zumindest teilweise in dem Sediment eingebettet ist. Zusätzlich umfasst die Vorrichtung ein Reflektometer, eine Stromversorgung und einen Telemetriesender. Die Sonde umfasst zwei parallelen Röhren, die in das Sediment eingebracht werden. Die beiden Röhren bilden eine Leitung aus, in die ein Signal eingekoppelt wird. Die Impedanz der Leitung ist von dem die Leitung umgebenden Material abhängig. In einer Ausführungsform werden an Grenzflächen Teile des Signals reflektiert, wobei die Laufzeit gemessen wird. Die Laufzeit ist ein Maß für den Abstand der Grenzfläche zum Beginn der Leitung. Alternativ wird ein frequenzmoduliertes Signal eingekoppelt, bei dem die Frequenz beispielsweise von 100 MHz auf 1000 MHz ansteigt. Das reflektierte Signal wird anschließend mit dem zeitverzögerten Ursprungssignal gemischt und das entstehende Differenzsignal wird ausgewertet, wobei die Frequenz des Differenzsignals ein Maß für den Abstand der reflektierenden Grenzfläche ist.

Nachteilig bei dem beschriebenen Verfahren ist, dass für den durch die Messungen abgedeckten Bereich eine definierte Ubertragungsleitung für die verwendeten Signale benötigt wird.

Aus US 2015/316402 A1 ist ein Verfahren zum Erkennen von Ablagerungen in einem Rohrsystem bekannt, bei dem über zumindest eine Mikrowellensonde Mikrowellen eingekoppelt werden, die sich im Rohrsystem wie in einem Hohlleiter ausbreiten. Über Reflexions- bzw. Transmissionsmessungen über einen weiten Frequenzbereich wird aus Amplituden- und Phaseninformationen auf Ablagerungen geschlossen.

Es ist somit eine Aufgabe der Erfindung ein Verfahren bereitzustellen, mit dem Ablagerungen in einem Rohrsystem erkannt und Informationen über deren Anordnung in dem Rohrsystem erhalten werden.

Gemäß Anspruch 1 wird ein Verfahren zum Erkennen von Ablagerungen in einem Rohrsystem eines Apparats vorgeschlagen, wobei der Apparat von einem Fluid durchströmt wird. Bei dem Verfahren ist vorgesehen, dass mindestens eine Mikrowellensonde in das Rohrsystem derart eingebracht wird, dass ein für Mikrowellenstrahlung transparentes Fenster der Mikrowellensonde von dem Fluid angeströmt wird, und dass über die mindestens eine Mikrowellensonde durch das für die Mikrowellenstrahlung transparente Fenster Mikrowellen in das Rohrsystem eingekoppelt werden, wobei sich die in das Rohrsystem eingekoppelten Mikrowellen in dem Rohrsystem wie in einem Hohlleiter ausbreiten, wobei
a.) eine Reflexionsmessung durchgeführt wird, bei der Reflexionen der von der mindestens einen Mikrowellensonde abgestrahlten Mikrowellen durch die jeweilige Mikrowellensonde wieder empfangen werden, wobei Grenzfrequenzen bestimmt werden, wobei für das Bestimmen der Grenzfrequenzen die Frequenz der in das Rohrsystem eingekoppelten Mikrowellen in einem vorgegebenen Bereich variiert wird und zu jeder Frequenz die Intensität der reflektierten Mikrowellenstrahlung bestimmt wird, und aus einem Vergleich mit einer Referenz oder einer vorherigen Messung auf eine Verengung in der Umgebung der Mikrowellensonde geschlossen wird, wobei auf Verengungen hinweisende Grenzfrequenzen erkannt werden und der freie Querschnitt an der Verengung aus dieser auf eine Verengung hinweisenden Grenzfrequenz bestimmt wird, und/oder
b.) mindestens zwei Mikrowellensonden voneinander beabstandet in das Rohrsystem eingebracht werden und eine Transmissionsmessung zwischen zwei Mikrowellensonden durchgeführt wird, wobei die Anordnung der beiden Mikrowellensonden einen Rohrsystemabschnitt definiert, Grenzfrequenzen des Rohrsystemabschnitts bestimmt werden, wobei für das Bestimmen der Grenzfrequenzen die Frequenz der in das Rohrsystem eingekoppelten Mikrowellen in einem vorgegebenen Bereich variiert wird und zu jeder Frequenz die Intensität der reflektierten Mikrowellenstrahlung bestimmt wird, und aus einem Vergleich mit einer Referenz oder einer vorherigen Messung auf eine Verengung im Rohrsystemabschnitt geschlossen wird, wobei auf Verengungen hinweisende Grenzfrequenzen erkannt werden und der freie Querschnitt an der Verengung aus dieser auf eine Verengung hinweisenden Grenzfrequenz bestimmt wird,
wobei aus dem Erkennen einer Verengung auf das Vorhandensein von Ablagerungen geschlossen wird.

Eine Verengung kann eine lokale Engstelle des Rohrsystems sein, welche räumlich begrenzt ist. In diesem Fall sind die Ablagerungen in dem Rohrsystem ungleichmäßig verteilt. Als eine Verengung werden auch gleichmäßige verteilte Ablagerungen angesehen, welche sich über einen großen Teil des Rohrsystems oder über das gesamte Rohrsystem erstrecken und den Durchmesser des Rohrsystems homogen verringern.

Bei dem Verfahren ist vorgesehen, Mikrowellenstrahlung in das zu untersuchende Rohrsystem einzukoppeln. Das Rohrsystem umfasst ein Rohr oder mehrere Rohre mit üblicherweise kreisförmigem Querschnitt aus einem elektrisch leitfähigen Material, so dass diese näherungsweise einen Hohlleiter mit kreisförmigem Querschnitt darstellen. In einem Hohlleiter können sich elektromagnetische Wellen, wie beispielsweise Mikrowellen, mit nur geringer Dämpfung ausbreiten. Durch die geometrischen Abmessungen des Hohlleiters wird jedoch eine Grenzfrequenz (cut-off frequency) vorgegeben. Elektromagnetische Wellen mit einer Frequenz unterhalb dieser Grenzfrequenz können sich nicht in dem Hohlleiter ausbreiten.

In dem Hohlleiter können sich elektromagnetische Wellen mit verschiedenen Schwingungsmoden ausbreiten, wobei die Grenzfrequenz für jede der Schwingungsmoden verschieden ist. Bei TM Schwingungsmoden (transversal magnetisch) verschwindet das magnetische Feld in der Ausbreitungsrichtung der Welle, so dass nur das elektrische Feld eine Komponente in Ausbreitungsrichtung aufweist. Bei TE Schwingungsmoden (transversal elektrisch) verschwindet umgekehrt das elektrische Feld in der Ausbreitungsrichtung, so dass nur das magnetische Feld eine Komponente in Ausbreitungsrichtung aufweist. Die Schwingungsmoden werden zudem mit zwei Indizes gekennzeichnet, wobei für Schwingungsmoden eines Hohlleiters mit kreisförmigem Querschnitt der erste Index die Anzahl der Perioden des Felds in Umfangsrichtung und der zweite Index die Anzahl der Nullstellen des Feldes in radialer Richtung angibt. Die Schwingungsmoden TM₀₁ und TE₁₁ weisen für kreisrunde Hohlleiter die niedrigsten Grenzfrequenzen auf und werden bei dem vorgeschlagenen Verfahren bevorzugt verwendet.

Zum Einkoppeln der Mikrowellenstrahlung wird eine Mikrowellensonde verwendet. Diese umfasst in ihrem Inneren eine Antenne, über die Schwingungsmoden in der Umgebung der Mikrowellensonde angeregt werden können. Zum Schutz vor den Umgebungsbedingungen im Inneren des Rohrsystems des Apparats ist die Antenne abgedeckt, wobei die Mikrowellen durch ein für die Mikrowellenstrahlung transparentes Fenster in das Rohrsystem gelangen.

Weist das Rohrsystem zumindest einen gekrümmten Bereich auf, beispielsweise einen 90° Bogen, so ist es bevorzugt die Mikrowellensonde an dem gekrümmten Bereich in das Rohrsystem einzubringen. Innerhalb des gekrümmten Bereichs liegt eine im Vergleich zu geraden Abschnitten des Rohrsystems abweichende Geometrie vor. Hierbei hat sich gezeigt, dass durch die geometrisch abweichende Umgebung der Mikrowellensonde bevorzugt die TE11 Mode mit niedriger Grenzfrequenz angeregt wird.

Da die Ablagerungen, die mit dem vorgeschlagenen Verfahren erkannt werden sollen, häufig kohlenstoffhaltig sind, wie beispielsweise Verkokungen in einem Steamcraker, sind die im Inneren des Rohrsystems erwarten Ablagerungen üblicherweise elektrisch leitfähig. Elektrisch leitfähige Materialien schirmen jedoch Mikrowellenstrahlung ab, so dass das Fenster der Mikrowellensonde durch die Ablagerungen nicht vollständig überdeckt werden darf.

Hierbei hat sich überraschenderweise gezeigt, dass der im Apparat geführte Fluidstrom, wenn dieser die Mikrowellensonde anströmt, das Auftreten von Ablagerungen auf dem Fenster der Mikrowellensonde verhindern kann. Die Mikrowellensonde wird hierzu derart in das Rohrsystem eingesetzt, dass das Fenster direkt von dem Fluid angeströmt wird. Bei dem Fluidstrom handelt es sich beispielsweise im Fall eines Steamcrackers um das Spaltgas. Bevorzugt werden mit dem Fluid Partikel mitgeführt, wobei die auftreffenden Partikel das Fenster zuverlässig von Ablagerungen befreien. Dies funktioniert ähnlich wie das Reinigen von Oberflächen mit einem Sandstrahl.

Für die Funktion der Mikrowellensonde ist es dabei nicht erforderlich, dass die gesamte Fläche des Fensters angeströmt und damit von Ablagerungen freigehalten wird. Bei einem Fenster in Form einer stabförmigen Hülle wird die Mikrowellensonde bevorzugt so eingebracht, dass die Längsseite der Hülle angeströmt wird. Bei einem ebenen Fenster oder einem konisch geformten Fenster wird die Mikrowellensonde bevorzugt so eingebracht, dass das Fenster senkrecht zur Ebene bzw. zur Längsachse angeströmt wird.

Die mit dem Fluid geführten Partikel können bei dem in dem Apparat durchgeführten Prozess entstehen. Beispielsweise handelt es sich bei den Partikeln um beim Steamcracken entstehende Kohlenstoffpartikel bzw. Rußpartikel. Diese Partikel weisen eine vergleichbare Härte wie die der entstehenden Ablagerungen bzw. Verkokungen auf, so dass die Partikel abrasiv wirken. Alternativ oder zusätzlich ist es denkbar, Partikel mit einer den Ablagerungen vergleichbaren oder größeren Härte dem Fluid zuzugeben.

Die mit der Mikrowellensonde in das Rohrsystem eingekoppelten Mikrowellen breiten sich in dem Rohrsystem wie in einem Hohlleiter aus. Zum Erkennen der Ablagerungen können die Mikrowellen über eine zweite Mikrowellensonde, welche an einer anderen Stelle im Rohrsystem angeordnet ist, wieder empfangen werden. Eine derartige Messung wird als Transmissionsmessung bezeichnet. Alternativ oder zusätzlich können reflektierte Mikrowellen wieder über die gleiche Mikrowellensonde empfangen werden, die diese in das Rohrsystem eingekoppelt hat. Eine derartige Messung wird als Reflexionsmessung bezeichnet.

Das Rohrsystem eines typischen Apparats, wie beispielweise einem Steamcracker, enthält Störstellen wie Abzweigungen, Biegungen, Verteiler, Anschlüsse und Änderungen am Rohrquerschnitt. Jede Änderung am Rohr, welche eine Abweichung vom Hohlleiter mit Kreisquerschnitt mit konstantem Durchmesser darstellt, wirkt auf die Mikrowellenstrahlung wie eine Störung, so dass an diesen Stellen die elektromagnetische Schwingung gedämpft wird und ein Teil der eingekoppelten Strahlung reflektiert wird. Überraschenderweise hat sich gezeigt, dass trotz der Vielzahl dieser Störstellen in einem typischen Rohrsystem das Erkennen von Ablagerungen mithilfe einer auf Mikrowellen basierenden Messung möglich ist.

Gemäß Merkmal a) wird eine Reflexionsmessung durchgeführt, bei der Reflexionen der von einer Mikrowellensonde abgestrahlten Mikrowellen durch dieselbe Mikrowellensonde wieder empfangen werden. Dabei ist vorgesehen, Grenzfrequenzen zu bestimmen. Eine Grenzfrequenz ist charakteristisch für den kleinsten freien Rohrquerschnitt von Störstellen in einer Umgebung um die Mikrowellensonde. Diese Umgebung ist dabei gegeben durch den Bereich des Rohrsystems, aus dem Reflexionen der Mikrowellenstrahlung detektiert und ausgewertet werden können. Je empfindlicher die verwendete Messtechnik bzw. je größer die Intensität der eingekoppelten Mikrowellenstrahlung ist, desto größer ist die Umgebung, aus der Reflexionen noch empfangen werden können und entsprechend kann ein größerer Bereich des Rohrsystems überwacht werden. Zum Bestimmen der Grenzfrequenzen wird die Frequenz der durch die Mikrowellensonde abgestrahlten Mikrowellen in einem vorgegebenen Bereich variiert und es wird zu jeder Frequenz die Intensität der reflektierten Mikrowellenstrahlung bestimmt.

Für die bei typischen Rohrsystemen verwendeten Durchmesser im Bereich von 80 mm bis 120 mm liegt die Grenzfrequenz für die TE₁₁ Schwingungsmode im Bereich von 1,6 GHz bis 2,4 GHz. Bei einer durch Ablagerungen verursachten Verengung tritt im Bereich der Verengung eine Grenzfrequenz auf, die entsprechend dem Grad der Verengung höher liegt. Es ist daher bevorzugt, die untere Grenze für die Variation der Mikrowellenfrequenz im Bereich der niedrigsten Grenzfrequenz für das von Ablagerungen freie Rohr zu wählen. Die obere Grenze kann entsprechend der Dicke der erwarteten Ablagerungen gewählt werden, wobei die obere Grenze häufig durch die verwendete Messtechnik bestimmt ist. Beispielsweise wird die Frequenz in einem Bereich von 300 kHz bis 20 GHz, bevorzugt im Bereich von 1 bis 10 GHz und besonders bevorzugt im Bereich von 1,5 bis 4 GHz variiert.

Für das Generieren der Mikrowellen, das Empfangen der Mikrowellen und das anschließende Auswerten der Messung kann ein vektorieller Netzwerkanalysator (VNA) verwendet werden. Ein Netzwerkanalysator enthält einen steuerbaren Mikrowellengenerator, einen Empfänger und notwendige Elektronik wie beispielsweise Verstärker und Analog/Digitalwandler für die Auswertung der Messung. Es ist aber auch möglich, die jeweiligen Bestandteile in Form einzelner Geräte einzusetzen.

Wird die Intensität der reflektierten Mikrowellenstrahlung gegen die Frequenz aufgetragen, so kann eine Grenzfrequenz in Form einer Änderung der Intensität erkannt werden. Bereits bei einem einfachen Rohr ohne Abzweigungen können mehrere Grenzfrequenzen ermittelt werden, welche durch die geometrischen Abmessungen des durch das Rohr gebildeten Hohlleiters für die verschiedenen Schwingungsmoden gegeben sind. Weitere erkannte Grenzfrequenzen deuten auf Verengungen in dem Rohr bzw. dem Rohrsystem hin, welche durch Ablagerungen wie beispielsweise Verkokungen verursacht werden. Da die Grenzfrequenz von den geometrischen Abmessungen des Hohlleiters abhängig ist, kann auf diese Weise der freie Durchmesser des Rohres an dieser Verengung aus der ermittelten Grenzfrequenz bestimmt werden.

Für das Erkennen einer Verengung in einem komplexen Rohrsystem eines Apparats ist vorgesehen, die Messergebnisse der Reflexionsmessung mit einer Referenz oder einer vorherigen Messung zu vergleichen. Hierbei werden insbesondere alle in der Messung ermittelten Grenzfrequenzen mit den in der Referenz bzw. der vorherigen Messung enthaltenen Grenzfrequenzen verglichen. Eine ermittelte Grenzfrequenz, die nicht in der Referenz bzw. der vorherigen Messung enthalten ist, deutet hierbei auf eine Verengung hin, die durch Ablagerungen verursacht ist. Es wird somit darauf geschlossen, dass Ablagerungen vorhanden sind. Der an der Verengung vorhandene freie Rohrquerschnitt wird dann aus dieser Grenzfrequenz berechnet.

In einem nicht erfindungsgemäßen Beispiel kann auch eine Reflexionsmessung durchgeführt werden, bei der Reflexionen der von einer Mikrowellensonde abgestrahlten Mikrowellen durch dieselbe Mikrowellensonde wieder empfangen werden. Dabei ist vorgesehen, die Signallaufzeit eines reflektierten Mikrowellensignals zu bestimmen. Jede Störstelle, wie beispielsweise Abzweigungen, Biegungen, Verteiler, Anschlüsse und Änderungen am Rohrquerschnitt verändert die Eigenschaften des als Hohlleiter dienenden Rohrsystems, wobei bei jeder Änderung ein Teil des Mikrowellensignals reflektiert wird. Jede empfangene Reflektion stellt somit einen Hinweis auf eine Störstelle in der Umgebung der Mikrowellensonde dar. Die Entfernung der Störstelle zu der Mikrowellensonde ist dabei gegeben aus der halben ermittelten Signallaufzeit multipliziert mit der Ausbreitungsgeschwindigkeit der Mikrowellen in dem Rohrsystem.

Für diese Laufzeitmessung wird durch die Mikrowellensonde ein Signal abgestrahlt und Reflexionen dieses Signals werden wieder durch dieselbe Mikrowellensonde empfangen und ausgewertet. In der Zeitdomänenreflektometrie (TDR) ist das abgestrahlte Signal ein zeitlich begrenzter Puls der durch einen Pulsgenerator erzeugt, und dessen Antwortsignal mit einem breitbandigen Oszilloskop gemessen wird. Alternativ kann z.B. mit einem Netzwerkanalysator (VNA) über die Mikrowellensonde ein kontinuierliches monochromatisches Mikrowellensignal eingekoppelt werden, so dass ein Mikrowellenresonanzfeld erzeugt wird, wobei über die Mikrowellensonde die Intensität des Mikrowellenresonanzfelds bestimmt wird. Hierzu werden Amplitude und Phase bestimmt. Anschließend wird die Frequenz des kontinuierlichen monochromatischen Mikrowellensignals variiert und die Intensität erneut gemessen. Der Vorgang wird für eine Vielzahl von Frequenzen aus einem vorgegebenen Frequenzbereich wiederholt. Hierdurch wird die Reaktion des Rohrsystems in dem vorgegebenen Frequenzbereich bestimmt. Anschließend werden die für die jeweiligen Frequenzen erhaltenen Intensitäten mittels einer inversen FourierTransformation aus dem Frequenzbereich in den Zeitbereich transformiert. Nach der Transformation in den Zeitbereich liegt die Messung in Form von gemessener Zeitbereichsamplitude gegen Zeit vor (TD Spektrum). Durch dieses Verfahren wird die Antwort des Rohrsystems auf einen zeitlich begrenzten Mikrowellenpuls berechnet.

Das Messverfahren mit Frequenzvariation eines kontinuierlichen monochromatischen Mikrowellensignals hat gegenüber dem TDR Messverfahren ein besseres Signal/Rausch Verhältnis und damit einen größeren dynamischen Bereich. Damit können auch Signale mit geringer Intensität noch gemessen werden.

Lokale Maxima im TD Spektrum beziehungsweise in der Laufzeitmessung deuten auf eine Störstelle hin. Die Entfernung der Störstelle zu der Antenne entspricht dabei dem halben Zeitwert, an dem das lokale Maximum auftritt, multipliziert mit der Ausbreitungsgeschwindigkeit der Mikrowelle in dem Rohrsystem. In der Regel kennzeichnet eine Störstelle den Beginn oder das Ende einer Verengung des Rohrsystems.

Es ist bevorzugt, die untere Grenze für den bei der Messung vorgegebenen Frequenzbereich im Bereich der niedrigsten Grenzfrequenz für das von Ablagerungen freie Rohrsystem zu wählen. Die obere Grenze kann entsprechend der Dicke der erwarteten Ablagerungen gewählt werden, wobei die obere Grenze häufig durch die verwendete Messtechnik bestimmt ist. Beispielsweise wird die Frequenz in einem Bereich von 300 kHz bis 20 GHz, bevorzugt im Bereich von 1 bis 10 GHz und besonders bevorzugt im Bereich von 1.5 bis 4 GHz variiert.

Die ermittelten Störstellen werden mit einer Referenz oder mit einer vorherigen Messung verglichen. Dabei werden insbesondere die Abstände der ermittelten Störstellen zu der Mikrowellensonde mit den Abständen der in der Referenz bzw. der vorherigen Messung enthaltenen Störstellen verglichen. Eine in der Referenz bzw. in der vorherigen Messung nicht bekannte Störstelle deutet auf Ablagerungen hin, die neu entstanden sind. Der Abstand der Ablagerung zur Mikrowellensonde entspricht dem bestimmten Abstand der entsprechenden Störstelle zu der Mikrowellensonde. Anhand der bekannten Position der Mikrowellensonde in dem Rohrsystem kann aus dem Abstand der Störstelle bzw. der erkannten Ablagerung zu der Mikrowellensonde auch die Position der Ablagerung in dem Rohrsystem bestimmt werden.

Bei dem nicht erfindungsgemäßen Beispiel können auch mehrere Mikrowellensonden voneinander beabstandet in das Rohrsystem eingebracht werden. Beispielsweise werden zwei Mikrowellensonden voneinander beabstandet in das Rohrsystem eingebracht und die Reflexionsmessung wird von zwei Seiten eines durch die beiden Mikrowellensonden definierten Rohrsystemabschnitts durchgeführt. Dabei ist es gegenüber einer Messung mit nur einer Mikrowellensonde zusätzlich möglich, aus den ermittelten Entfernungen einer Verengung zu den beiden Mikrowellensonden und der bekannten Länge des Rohrsystemabschnitts die Länge der Verengung oder bei zwei Verengungen deren Abstand zueinander zu bestimmen.

Erfindungsgemäß kann alternativ oder zusätzlich gemäß Merkmal b) eine Transmissionsmessung durchgeführt werden, bei der von einer ersten Mikrowellensonde Mikrowellen in das Rohrsystem eingebracht und von einer zweiten Mikrowellensonde wieder empfangen werden. Bei dieser Messung wird ein Rohrsystemabschnitt untersucht, der zwischen den beiden in das Rohrsystem eingebrachten Mikrowellensonden liegt.

Der grundsätzliche Ablauf der Messung entspricht dem der mit Bezug zu Merkmal a) beschriebenen Reflexionsmessung, wobei die Mikrowellen von der ersten Mikrowellensonde in das Rohrsystem eingekoppelt werden und von der zweiten Mikrowellensonde empfangen werden. Für das Erkennen einer Verengung in einem komplexen Rohrsystem eines Apparats ist vorgesehen, die Messergebnisse der Transmissionsmessung mit einer Referenz oder einer vorherigen Messung zu vergleichen. Hierbei werden insbesondere alle in der Messung ermittelten Grenzfrequenzen mit den in der Referenz bzw. der vorherigen Messung enthaltenen Grenzfrequenzen verglichen. Eine ermittelte Grenzfrequenz, die nicht in der Referenz bzw. der vorherigen Messung enthalten ist, deutet hierbei auf eine Verengung in dem Rohrsystemabschnitt hin, die durch Ablagerungen verursacht ist. Es wird somit darauf geschlossen, dass Ablagerungen vorhanden sind. Der an der Verengung vorhandene freie Rohrquerschnitt wird dann aus dieser Grenzfrequenz berechnet.

Zusätzlich zu dem Erkennen einer Verengung über das Bestimmen der Grenzfrequenzen kann vorgesehen sein, die Amplitude des transmittierten Mikrowellensignals zu bestimmen. Diese Amplitude kann mit einer Referenz oder einer vorherigen Messung verglichen werden. Eine Veränderung der Amplitude, insbesondere eine Verringerung der Amplitude, kann auf das Vorhandensein einer neuen Verengung hinweisen, die durch Ablagerungen verursacht ist.

Die Messungen gemäß der Merkmale a und b können einzeln oder auch in Kombination eingesetzt werden. Bevorzugt werden die Messungen fortlaufend während des Betriebs des Apparats durchgeführt, wobei eine zeitliche Änderung der gemessenen Parameter bestimmt wird. Dabei ist vorgesehen, dass die Betriebsbedingungen des Apparats variiert werden, wobei bei einer Beschleunigung der zeitlichen Änderung auf ungünstige Betriebsbedingungen geschlossen wird und bei einer Verlangsamung der zeitlichen Änderung auf günstige Betriebsbedingungen geschlossen wird. Auf diese Weise können die Betriebsparameter des Apparats fortlaufend derart optimiert werden, dass das Entstehen von Ablagerungen minimiert wird.

Hierbei ist es vorteilhafterweise möglich, Parameter zu optimieren, die bestimmte räumliche Bereiche des Rohrsystems beeinflussen. Wird das Rohrsystem beispielsweise an mehreren Punkten beheizt, so können über die bekannten Positionen der Mikrowellensonden und die ermittelten Abstände der Ablagerungen zu den Mikrowellensonden die Ablagerungen den einzelnen beheizten Punkten zugeordnet werden. Treten nun an einem oder an mehreren Punkten vermehrt Ablagerungen durch Übertemperaturen auf, so kann das Beheizen dieser kritischen Punkte gezielt optimiert werden. Es ist somit bevorzugt, die bestimmten Positionen erkannter Ablagerungen für eine Optimierung von Prozessparametern zu nutzen.

Die Messung mit dem vorgeschlagenen Verfahren kann kontinuierlich erfolgen, wobei die mindestens eine Mikrowellensonde während der gesamten Dauer der Messung in dem Apparat eingesetzt bleibt. Alternativ ist es möglich, das Verfahren diskontinuierlich auszuführen, wobei die mindestens eine Mikrowellensonde nur für das Aufnehmen eines Messpunkts eingesetzt wird, anschließend wieder entfernt wird und erst für die nächste Messung wieder in den Apparat eingebracht wird.

Die für einen Vergleich der Messwerte verwendeten Referenzwerte können anhand einer Referenzmessung an dem Rohrsystem erhalten werden, solange dieses noch frei von Ablagerungen ist. Eine weitere Möglichkeit für das Ermitteln der Referenzwerte ist, diese anhand eines Modells zu ermitteln. Dieses Modell kann beispielsweise ein Computermodell oder ein in einem verkleinerten Maßstab aufgebautes Modell des Rohrsystems sein. Dabei können an dem verkleinerten Modell die Mikrowellensonden wie später am Rohrsystem des Apparats angeordnet werden und die Referenzwerte bestimmt werden. In einem weiteren Schritt werden die am verkleinerten Modell erhaltenen Referenzwerte auf die Größe des Apparats skaliert.

Weist das Rohrsystem des Apparats Verbindungsstellen auf, beispielsweise in Form von Flanschen, an denen zwei Teile des Rohrsystems zusammengefügt sind, kann es vorkommen, dass Mikrowellenstrahlung an dieser Verbindungsstelle aus dem als Hohlleiter dienenden Rohrsystem austreten kann. Diese austretende Mikrowellenstrahlung kann gegebenenfalls über weitere Verbindungsstellen wieder in das Rohrsystem einkoppeln und die Messung verfälschen. Es ist daher bevorzugt vorgesehen, dass an Verbindungsstellen des Rohrsystems eine Abschirmung angeordnet wird. Diese Abschirmung ist bevorzugt ein elektrisch leitfähiges Material, beispielsweise ein Blech, welches die Verbindungsstelle elektrisch abdichtet.

Bei dem Apparat handelt es sich bevorzugt um einen Steamcracker.

Beispielhaft wird im Folgenden eine nicht erfindungsgemäße Mikrowellensonde beschrieben, die für die Verwendung in den beschriebenen Verfahren geeignet ist. Bevorzugt ist die Mikrowellensonde zur Verwendung in einem der beschriebenen Verfahren eingerichtet, so dass die Verfahrensmerkmale entsprechend für die Mikrowellensonde gelten und umgekehrt der Merkmale der Mikrowellensonde entsprechend für die Verfahren. Mikrowellensonden, die in die zu untersuchenden Apparate eingebracht werden, sind dort häufig erhöhten Temperaturen im Bereich von 800 bis 1350°C ausgesetzt. Zudem werden in den Apparaten häufig korrosive Stoffe und abrasive Medien eingesetzt, die die Mikrowellensonden angreifen können.

Es wird eine Mikrowellensonde zum Einkoppeln von Mikrowellen in ein Rohrsystem eines Apparats vorgeschlagen. Die Mikrowellensonde umfasst eine Mikrowellenantenne, ein Fenster aus einem für Mikrowellenstrahlung transparenten Material, ein Koaxialkabel, welches mit der Mikrowellenantenne verbunden ist, und eine Hülse. Ferner ist vorgesehen, dass
a) die Mikrowellenantenne aus einer temperaturbeständigen Metalllegierung, bevorzugt einer Nickelbasislegierung, besteht, dass das Koaxialkabel eine temperaturbeständige Metalllegierung und ein anorganischem Dielektrikum umfasst und dass das Fenster als eine Hülle ausgestaltet ist, welche die Mikrowellenantenne umgibt, wobei die Hülse derart eingerichtet ist, dass sich die Hülse außen an das Rohrsystem anschließt und wobei das als Hülle ausgestaltete Fenster an der dem Koaxialkabel zugewandten Seite in ein Schutzrohr übergeht, welches über ein Längenausgleichselement mit der Hülse verbunden ist, wobei die Hülse das Schutzrohr zumindest teilweise umgibt oder
b) die Hülse aus einem elektrisch leitfähigem Material besteht und als Hohlleiter ausgebildet ist, wobei der Innendurchmesser der Hülse dem Innendurchmesser des Rohrsystems entspricht, wobei die Hülse an einer ersten Seite eine Öffnung in Richtung des Rohrsystems aufweist, an der zweiten entgegengesetzten Seite die Mikrowellenantenne angeordnet ist, die von einer für Mikrowellenstrahlung transparenten Hülle abgedeckt ist und sich in das Innere der Hülse erstreckt, und das Fenster als Verdrängungskörper aus einem temperaturbeständigen und für Mikrowellenstrahlung transparenten Material ausgestaltet ist, der den verbleibenden Innenraum der Hülse einnimmt. Optional kann der Verdrängungskörper an der der Öffnung zugewandten Seite eine Kappe aus einem ebenfalls für Mikrowellenstrahlung transparenten Material umfassen.

Bei üblichen Mikrowellensonden ist insbesondere deren fehlende Temperaturbeständigkeit problematisch. Aufgrund hoher Temperaturen und korrosiven Umgebungsbedingungen wird das Material der verwendeten Antennen beeinträchtigt, so dass sich auch die elektrischen Eigenschaften verändern. Hierdurch wird wiederum die Impedanz verändert, so dass die Einkopplung der Mikrowellenstrahlung beeinträchtigt wird. Insbesondere ist hierbei problematisch, dass diese Prozesse fortlaufend voranschreiten, so dass sich die Eigenschaften der üblichen Mikrowellensonden ständig ändern und eine zuverlässige Anwendung der beschriebenen Verfahren nicht möglich ist. Auch die für die Anbindung der Antenne verwendeten üblichen Koaxialkabel sind für einen Einsatz unter erhöhter Temperatur nicht geeignet. Es ist somit erforderlich, die Mikrowellensonde derart auszuführen, dass deren kritische Komponenten, insbesondere die Antenne und das Koaxialkabel, den Bedingungen im Inneren des Rohrsystems standhalten oder dass deren kritische Komponenten von den hohen Temperaturen und korrosiven Umgebungsbedingungen isoliert sind.

Unter dem Begriff temperaturbeständig wird verstanden, dass das jeweilige Material zumindest bis zu einer vorgegebenen Temperatur einsetzbar und damit hitzebeständig ist. Bevorzugt ist das jeweilige Material bis zu einer Temperatur von mindestens 800 °C, besonders bevorzugt bis zu einer Temperatur von mindestens 1000 °C, ganz besonders bevorzugt bis zu einer Temperatur von mindestens 1200 °C und am meisten bevorzugt bis zu einer Temperatur von mindestens 1400 °C beständig und damit einsetzbar.

Gemäß Variante a) ist vorgesehen, die kritischen Komponenten der Mikrowellensonde, insbesondere die Antenne und das Koaxialkabel, temperaturfest und korrosionsbeständig auszugestalten. Dies erlaubt es die Mikrowellensonde in das Rohrsystem eines Apparats einzubringen, in dem hohe Temperaturen auftreten können. Hierzu ist vorgesehen, die Antenne aus einer temperaturbeständigen Metalllegierung zu fertigen. Geeignete Legierungen umfassen beispielsweise Nickelbasislegierungen wie z.B. Inconel 600. Es ist zu beachten, dass hochtemperaturbeständige Legierungen diese Eigenschaft der Temperaturbeständigkeit aufweisen, weil festhaftende Oxidschichten (z.B. Chrom-Oxide) eine Passivierung bewirken. Die Anwesenheit solcher Deckschichten beeinflusst die effektive elektrische Leitfähigkeit des Materials und kann zu einer signifikanten Dämpfung der Mikrowellen führen. Daher werden die verwendeten Antennen bevorzugt mit Inertgas inertisiert.

Die Mikrowellenantenne ist bevorzugt als Stiftantenne ausgeführt, wobei die Länge des Stifts im Bereich von d/10 bis d gewählt ist. d bezeichnet hierbei den Innendurchmesser des Rohrsystems. Besonders bevorzugt ist die Länge des Stifts im Bereich von d/6 bis d/2 gewählt. Ganz besonders bevorzugt wird eine Länge des Stifts von d/4 bis d/2. Als Stift ausgeführte Mikrowellenantennen zeichnen sich durch eine besonders hohe Formstabilität aus. Durch die hohe Formstabilität ist das Verhalten der Mikrowellenantenne über einen langen Zeitraum konstant und die mit der Antenne durchgeführten Messungen sind gut reproduzierbar.

Weitere bevorzugte Ausgestaltungen der Mikrowellenantenne sind Schlaufenantennen für eine induktive Kopplung oder Hornantennen.

Die Antenne ist mit einem Koaxialkabel verbunden, welches ein anorganisches Dielektrikum wie beispielsweise Aluminiumoxid (Al₂O₃) oder Siliziumoxid (SiO₂) umfasst. Der Innenleiter und der Außenleiter sind bevorzugt korrosionsbeständig ausgeführt. Das Material des Innenleiters und des Außenleiters sind bevorzugt ausgewählt aus einer temperaturbeständigen Metalllegierung, bevorzugt eine Nickelbasislegierung wie z.B. Inconel 600. Durch die Wahl korrosionsbeständiger Materialien für die Leiter und die Wahl eines anorganischen Dielektrikums ist das Koaxialkabel eingerichtet, auch bei erhöhten Temperaturen seine Funktionsfähigkeit beizubehalten. Die vorgeschlagenen Koaxialkabel sind auch bei Temperaturen von bis zu 1000 °C noch funktionsfähig. Für das Beispiel eines Koaxialkabels aus Inconel 600 mit Al₂O₃ Dielektrikum bei 1000 °C und 8 GHz liegt die Kabeldämpfung bei ca. 30 dB/1,5 m.

Die Hülle, welche die Mikrowellenantenne umgibt und das Fenster darstellt, geht an der dem Koaxialkabel zugewandten Seite in ein Schutzrohr über, welches über ein Längenausgleichselement mit der Hülse verbunden ist. Die Hülse ist dabei derart angeordnet, dass diese das Schutzrohr zumindest teilweise umgibt. Das Fenster der Mikrowellensonde wird hingegen nicht von der Hülse umgeben. Der Übergang zwischen dem Fenster zum Schutzrohr kann an dem Punkt erfolgen, an dem das Koaxialkabel an die Antenne angeschlossen ist. Alternativ kann im Bereich des Fensters auch der Anschluss zwischen dem Koaxialkabel an die Antenne aufgenommen sein.

Für die Verbindung mit dem Rohrsystem werden bevorzugt Stutzen verwendet, die für das Einführen von Temperaturmesssonden vorgesehen sind. Dabei wird anstelle einer Temperatursonde die Mikrowellensonde eingeführt, wobei dabei die als Fenster dienende Hülle mitsamt der von der Hülle umgebenen Mikrowellenantenne in das Innere des Rohrsystems gelangen. Daher ist bevorzugt vorgesehen, dass der Durchmesser der Hülle dem Durchmesser einer Temperaturmesssonde entspricht. Bevorzugt ist der Durchmesser im Bereich von 20 bis 30 mm gewählt. Die Hülse der Mikrowellensonde wird hierbei nicht in das Innere des Rohrsystems eingebracht, sondern schließt außen an das Rohrsystem an. Hierzu kann beispielsweise ein Flansch an der Hülse vorgesehen sein, der an einem Gegenstück am Rohrsystem befestigt wird. Bei hohen Temperaturen, wie im Innern einer das Rohrsystem umgebenden Brennkammer, kann die Hülse alternativ direkt mit dem Rohrsystem verschweißt sein.

Um eine Längenänderung aufgrund einer Temperaturänderung der Hülle bzw. des Schutzrohrs aufzunehmen, ist vorgesehen, das Schutzrohr über ein Längenausgleichselement an der Hülse zu befestigen. Zudem kann bei der Durchführung der Hülle in das Rohrsystem eine lose Passung als Gleitlager vorgesehen sein, welches bei einer Längenänderung eine Bewegung der Hülle in Längsrichtung relativ zu dem Rohrsystem erlaubt. Das Gleitlager steht jedoch mit dem Inneren des Rohrsystems in Kontakt, so dass an dieser Stelle auftretende Ablagerungen die Funktion des Gleitlagers beeinträchtigen können. Durch das Längenausgleichselement werden auftretende mechanische Spannungen vermieden, die zu einer Beschädigung der Hülle führen könnten. Das Längenausgleichselement ist dabei vorteilhafterweise von dem Inneren des Rohrsystems abgetrennt, so dass dieses nicht durch Ablagerungen aus dem Rohrsystem in seiner Funktion beeinträchtigt werden kann.

Bevorzugt kann die Mikrowellensonde zusätzlich einen Temperatursensor enthalten. In diesem Fall bleibt beim Ersetzen einer bereits vorhandenen Temperaturmesssonde durch die vorgeschlagene Mikrowellensonde die Funktion der Temperaturmessung erhalten.

Gemäß Variante b) ist vorgesehen, eine thermische Trennung vorzusehen, wobei die kritischen Komponenten der Mikrowellensonde in einem Bereich verringerter Temperatur angeordnet sind. Bei Ankopplung an ein Rohrsystem sind die kritischen Komponenten thermisch vom Rohrsystem und damit von den im Rohrsystem auftretenden hohen Temperaturen getrennt.

Die Hülse besteht hierbei aus einem elektrisch leitfähigen Material und weist einen Innendurchmesser auf, der dem Innendurchmesser des Rohrsystems entspricht. Weist das Rohrsystem variierende Durchmesser auf, so entspricht der Innendurchmesser der Hülse dem Durchmesser des Rohrsystems an dem Punkt, an dem die Mikrowellensonde in das Rohrsystem eingebracht wird. Durch eine derartige Ausgestaltung der Hülse wirkt diese wie auch das Rohrsystem als ein Hohlleiter für Mikrowellen. Die Hülse weist an ihrer ersten Seite eine Öffnung auf, die zur Verbindung mit dem Rohrsystem eingerichtet ist.

Die Mikrowellenantenne ist an der entgegengesetzten Seite angeordnet und erstreckt sich in das Innere der Hülse, so dass die Hülse die Hülle und die Mikrowellenantenne vollständig oder zumindest teilweise umgibt. Der verbleibende Innenraum der Hülse ist mit einem Verdrängungskörper ausgefüllt. Dieser soll verhindern, dass kondensierbare Stoffe aus dem Rohrsystem in den kühleren, außerhalb einer Beheizung befindlichen, Bereich gelangen und dort auskondensieren Der Verdrängungskörper dient ferner als für Mikrowellenstrahlung transparentes Fenster. Das Fenster muss gegenüber der gegebenenfalls partikelbeladenen Strömung im Rohrsystem abrasionsbeständig sein. Hierzu ist der Verdrängungskörper bevorzugt aus einem Material gefertigt, welches gegenüber den Partikeln im Fluidstrom abrasionsbeständig ist. Alternativ oder zusätzlich kann der Verdrängungskörper eine Kappe aus einem gegenüber den Partikeln im Fluidstrom abrasionsbeständigen Material umfassen, wobei das Material der Kappe ebenfalls für die Mikrowellenstrahlung transparent ist. In diesem Fall kann der Verdrängungskörper aus einem weniger abrasionsbeständigen, preiswerteren Material gestaltet werden.

Die Mikrowellenantenne ist bevorzugt als Stiftantenne ausgeführt, wobei die Länge des Stifts im Bereich von d/10 bis d gewählt ist. d bezeichnet hierbei den Innendurchmesser des Rohrsystems. Besonders bevorzugt ist die Länge des Stifts im Bereich von d/6 bis d/2 gewählt. Ganz besonders bevorzugt wird eine Länge des Stifts von d/4 bis d/2. Als Stift ausgeführte Mikrowellenantennen zeichnen sich durch eine besonders hohe Formstabilität aus. Durch die hohe Formstabilität ist das Verhalten der Mikrowellenantenne über einen langen Zeitraum konstant und die mit der Antenne durchgeführten Messungen sind gut reproduzierbar.

Weitere bevorzugte Ausgestaltungen der Mikrowellenantenne sind Schlaufenantennen für eine induktive Kopplung sowie Hornantennen.

Der Verdrängungskörper isoliert die Mikrowellenantenne, so dass die Mikrowellenantenne vor hohen Temperaturen im Inneren des Rohrsystems und vor korrosiven Stoffen geschützt ist. Ein Anschluss der Antenne für ein Koaxialkabel befindet sich außerhalb des Verdrängungskörpers auf der der Öffnung zum Innenraum des Rohrsystems abgewandten Seite, so dass weder hohe Temperaturen noch korrosive Stoffe auf den Anschluss oder auf ein verwendetes Koaxialkabel einwirken. Zur Verbindung mit der Mikrowellenantenne kann daher in dieser Ausführungsvariante ein übliches Koaxialkabel verwendet werden. Für die Mikrowellenantenne ist ebenfalls keine Verwendung eines temperaturbeständigen Materials erforderlich. Es ist jedoch möglich, dennoch die im Zusammenhang mit der Variante a) beschriebenen Legierungen für die Mikrowellenantenne einzusetzen. Ebenso kann eines der im Zusammenhang mit der Variante a) beschriebenes temperaturbeständiges Koaxialkabel eingesetzt werden.

Der Verdrängungskörper ist aus einem temperaturbeständigen und für die Mikrowellenstrahlung transparenten Material aufgebaut. Als Materialien sind insbesondere temperaturbeständiger Zement und Schamotte geeignet.

Die der Öffnung zugewandte Seite des Fensters weist bevorzugt eine konische Form oder eine Keilform auf. Bei einer konischen Form ist vorgesehen, dass die Mikrowellensonde derart in das Rohrsystem eingebracht wird, dass das Fenster entlang seiner Längsachse, entlang der die Form konisch zuläuft, von dem Fluid angeströmt wird. Das Fluid trifft somit auf die konische Spitze des Fensters auf. Bei einer Keilform ist vorgesehen, dass das Fluid auf die durch den Keil gebildete schräge Fläche auftritt. Für den Fall, dass das Material des Verdrängungskörpers ausreichend abrasionsbeständig ist, kann dieser direkt mit konischer Spitze ausgeführt, und auf eine zusätzliche Abdeckung verzichtet werden. Ist der Verdrängungskörper nicht ausreichend abrasionsbeständig, so weist bevorzugt die verwendete Kappe eine konische Form oder eine Keilform auf.

Für die Verbindung mit dem Rohrsystem ist beispielsweise ein Flansch vorgesehen, der an einem entsprechenden Flansch des Rohrsystems befestigt werden kann. Der Flansch ist bevorzugt an der Seite der Hülse angeordnet, die zur Verbindung mit dem Rohrsystem eingerichtet ist. Alternativ ist die Hülse beispielsweise mittels Schweißen fest mit dem Rohrsystem verbunden. Befindet sich das Rohrsystem innerhalb einer heißen Umgebung, beispielsweise in einer Brennkammer, so ist die Länge der Hülse bevorzugt so groß gewählt, dass die Hülse aus der Brennkammer herausragt.

Sowohl bei dem Beispiel gemäß Variante a) als auch gemäß dem Beispiel gemäß Variante b) ist bevorzugt vorgesehen, dass ein Abstand zwischen der Mikrowellenantenne und der Hülle, in Richtung der Längsachse der Mikrowellenantenne gesehen, mindestens 20 mm beträgt. Besonders bevorzugt beträgt der Abstand im Bereich von 20 bis 80 mm und ganz besonders bevorzugt von 20 bis 40 mm. Bei Ausführung der Mikrowellenantenne als Stiftantenne wird der Abstand von der Spitze der Mikrowellenantenne aus gemessen.

Auch wenn das Fenster aus einem für Mikrowellen transparenten Material hergestellt ist, so stellt das Fenster einen Übergang von einem Medium in ein anderes Medium dar, an dem ein Teil der Mikrowellenstrahlung reflektiert wird. Durch das Vorsehen eines Abstands zwischen der Hülle und der Mikrowellenantenne wird eine Verbesserung der Qualität der Laufzeitmessungen (time domain Signale) erreicht.

Als Material für das Fenster gemäß Variante a) als auch für Variante b) sind Materialien geeignet, die temperaturbeständig sind, auch bei hohen Temperaturen eine geringe elektrische Leitfähigkeit aufweisen und keine offene Porosität aufweisen. Insbesondere sind temperaturbeständige Keramiken geeignet. Geeignete Keramikmaterialien umfassen insbesondere α-Al₂O₃ ohne offene Porosität. Bei der Variante b) wird bevorzugt eine Kappe aus dem Keramikmaterial verwendet.

Das Verbinden des Fensters mit dem Schutzrohr der Variante a) kann beispielsweise durch Verkleben oder Löten erfolgen. Geeignete Klebstoffe umfassen Panacol Cerastil V-336, Thermeez Hi Seal 7030.

Das Verbinden der Kappe mit dem Verdrängungskörper gemäß Variante b) kann beispielsweise durch Kleben mit den für Variante a) genannten Klebstoffen erfolgen.

Bei der Variante b) kann die Hülle ebenfalls aus einer Keramik bestehen, wobei insbesondere die gleiche Keramik wie für das Fenster eingesetzt werden kann.

Sowohl bei der Variante a) als auch bei der Variante b) kann der Bereich zwischen der Mikrowellenantenne und der diese umgebende Hülle mit einem Inertgas befüllt sein. Als Inertgas ist beispielsweise Stickstoff oder Argon geeignet. Durch den Einsatz des Inertgases wird die Temperaturstabilität der Mikrowellenantenne weiter verbessert. Selbst bei Einsatz temperaturbeständiger Nickelbasislegierungen wie Inconel 600 für die Mikrowellenantenne hat sich nämlich gezeigt, dass sich bei hohen Temperaturen in einer sauerstoffhaltigen Atmosphäre eine Chromoxidschicht (Cr₂O₃) ausbildet. Hierdurch werden die elektrischen Eigenschaften des Materials verändert, durch die wiederum die Eigenschaften der Mikrowellenantenne, die aus diesem Material besteht, verändert werden. Da diese Änderung schleichend erfolgt, ist eine Vergleichbarkeit der Messungen erschwert. Durch das Vorsehen des Inertgases in dem Raum zwischen der Hülle und der Mikrowellenantenne wird das Ausbilden einer derartigen Chromoxidschicht verhindert und die Stabilität der Mikrowellenantenne verbessert.

Ein weiteres nicht erfindungsgemäßes Beispiel ist das Bereitstellen eines Messsystems, welches wenigstens eine der beschriebenen Mikrowellensonden umfasst und zur Ausführung eines der beschriebenen Verfahren eingerichtet ist. Die im Rahmen der Verfahren oder der Mikrowellensonden beschriebenen Merkmale gelten daher für das Messsystem entsprechend. Das Messsystem umfasst bevorzugt einen Netzwerkkatalysator, der über Kabel mit der wenigstens einen Mikrowellensonde verbunden ist. Der Netzwerkanalysator umfasst mindestens einen Mikrowellengenerator und mindestens einen Mikrowellenempfänger.

Anhand der Zeichnungen wird die Erfindung nachstehend eingehender beschrieben.

Es zeigen:
- Figuren 1a bis 1d: verschiedene Konfigurationen von Rohrsystemen,
- Figuren 2a und 2b: Transmissionsspektren für verschiedene Rohrsysteme,
- Figur 3: das Einbringen einer Mikrowellensonde gemäß eines ersten Beispiels in ein Rohrsystem,
- Figur 4: eine schematische Darstellung der Spitze der Mikrowellensonde des ersten Beispiels,
- Figur 5: eine schematische Darstellung der Anschlussseite der Mikrowellensonde des ersten Beispiels,
- Figur 6: eine schematische Darstellung eines zweiten Beispiels einer Mikrowellensonde,
- Figuren 7a bis 7c: Reflexionsmessungen an einem Modellsystem im Frequenzraum,
- Figuren 8a bis 8c: Reflexionsmessungen an einem Modellsystem im Zeitraum,
- Figuren 9a bis 9c: Transmissionsmessungen an einem Modellsystem und
- Figur 10: eine schematische Darstellung eines Messsystems.

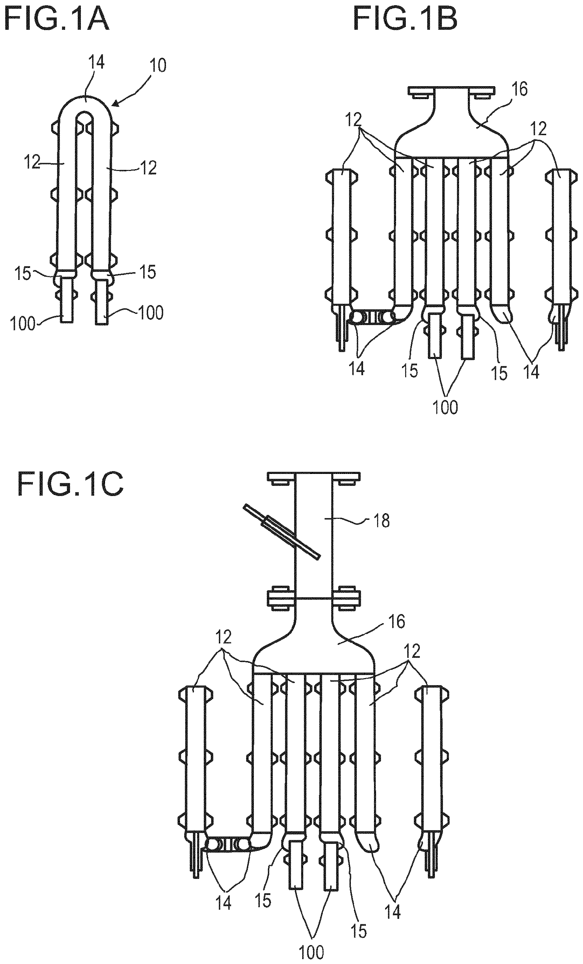

In den Figuren 1a bis 1d sind verschiedene Beispiele für Konfigurationen von Rohrsystemen 10 dargestellt. Die dargestellten Rohrsysteme 10 sind Teil eines Steamcrackers. In die in den Figuren 1a bis 1d dargestellten Rohrsysteme 10 sind jeweils zwei Mikrowellensonden 100 eingebracht. Die Mikrowellensonden 100 sind dabei jeweils in einem Blindflansch 15 eingesetzt, so dass an dieser Stelle Mikrowellenstrahlung in das Innere des Rohrsystems 10 eingekoppelt wird bzw. an dieser Stelle Mikrowellenstrahlung empfangen wird und das Rohrsystem 10 abgeschlossen wird.

In dem in Figur 1a dargestellten ersten Rohrsystem 10 umfasst dieses lediglich zwei gerade Rohre 12, die an einem Ende über eine Biegung 14 miteinander verbunden sind. Die Rohre 12 weisen einen Innendurchmesser von 3,84 cm auf. Die beiden geraden Rohre 12 sind an ihrem jeweiligen anderen Ende ebenfalls mit einem Blindflansch 15 verschlossen, wobei über die Blindflansche 15 jeweils eine Mikrowellensonde 100 in das Innere des Rohrsystems 10 eingebracht ist.

In dem in Figur 1b dargestellten zweiten Rohrsystem 10 wurde die Biegung 14, die die beiden Rohre 12 der Figur 1a miteinander verbindet, durch einen Verteiler 16 ersetzt. Der Verteiler 16 steht zusätzlich mit zwei weiteren Rohren 12 in Verbindung, so dass insgesamt vier Rohre 12 an den Verteiler 16 angeschlossen sind und parallel von dem Verteiler 16 wegführen. An die weiteren Rohre 12 schließt sich jeweils eine weitere Biegung 14 an. Die beiden mittleren Rohre 12 sind wie mit Bezug zu Figur 1a beschriebenen jeweils mit einem Blindflansch 15 verschlossen, wobei an den Blindflanschen 15 die beiden Mikrowellensonden 100 in das Rohrsystem 10 eingebracht sind. Die beiden äußeren Rohre 12 gehen über ihre jeweiligen weiteren Biegungen 14 in jeweils ein weiteres Rohr 12 über, wobei die weiteren Rohre 12 jeweils mit einem Blindflansch 15 abgeschlossen sind.

Das in Figur 1c dargestellte dritte Rohrsystem 10 entspricht dem mit Bezug zu Figur 1b beschriebenen Rohrsystem 10, wobei sich an den Verteiler 16 an der den Rohren 12 abgewandten Seite ein Sammelrohr 18 anschließt. Der Innendurchmesser des Sammelrohrs 18 ist 7,9 cm. Das Sammelrohr 18 weist einen größeren Durchmesser als die Rohre 12 auf.

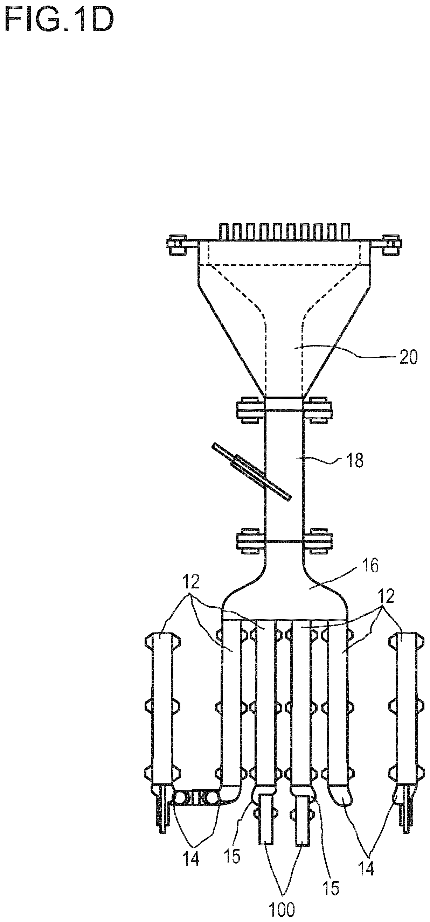

Das in Figur 1d dargestellte vierte Rohrsystem 10 entspricht dem mit Bezug zu Figur 1c beschriebenen Rohrsystem 10, wobei sich an das Sammelrohr 18 ein Konus 20 anschließt, der sich ausgehend von dem Sammelrohr 18 öffnet, so dass sich der Durchmesser weitet.

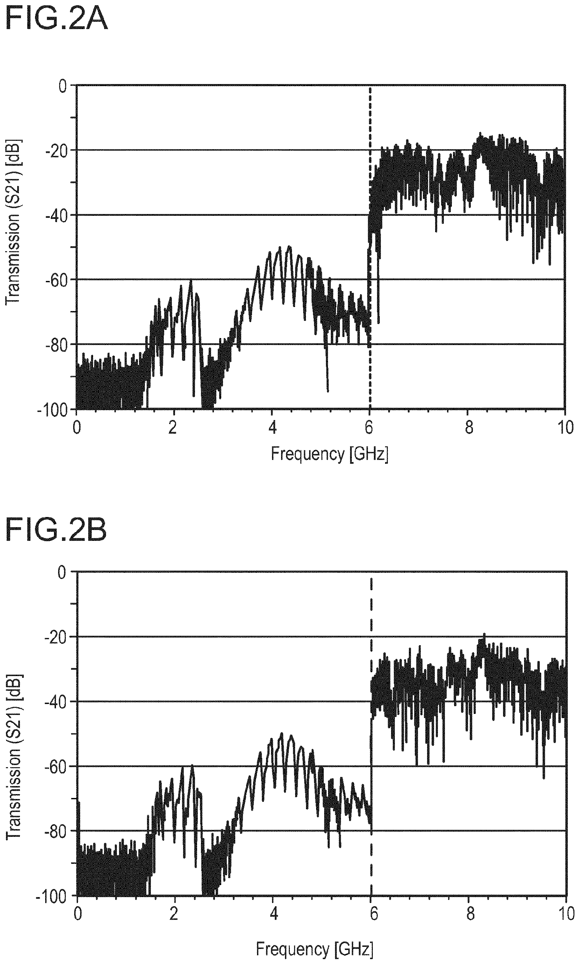

Die Figuren 2a und 2b zeigen für die mit Bezug zu den Figuren 1a und 1d beschriebenen Rohrsysteme 10 jeweils ein Transmissionsspektrum. Die dargestellten Spektren wurden erhalten, indem an einer der beiden Mikrowellensonden 100 ein Mikrowellensignal eines Signalgenerators angelegt wurde, so dass Mikrowellen in das Rohrsystem 10 eingekoppelt wurden. Die Mikrowellen haben sich in dem Rohrsystem 10 wie in einem Hohlleiter ausgebreitet und wurden durch die zweite Mikrowellensonde 100 wieder empfangen. Die Frequenz des Mikrowellensignals wurde in einem Bereich von 300 kHz bis 10 GHz variiert, wobei in den Figuren 2a und 2b die Stärke des transmittierten Signals gegen die Frequenz aufgetragen wurde. Zur Durchführung der Messung wurde ein Netzwerkanalysator Agilent E5071 C eingesetzt. Ein Netzwerkanalysator enthält einen Signalgenerator, Verstärker, Analog/Digitalwandler und Steuerungstechnik, um die Messung auszuführen.

Die beiden dargestellten Spektren zeigen im Frequenzbereich von 300 kHz bis 6 GHz einen bis auf kleine Abweichungen identischen Verlauf. Diese kleinen Abweichungen liegen im Rahmen des Messfehlers. Bei den vier in den Figuren 1a bis 1d dargestellten Rohrsystemen liegt für die gewählte Anordnung der Mikrowellensonden die Grenzfrequenz bei etwa 6 GHz. Für Frequenzen unterhalb der Grenzfrequenz kann keine Mikrowellenstrahlung in das Rohrsystem eingekoppelt werden, so dass der identische Verlauf der Spektren zu erwarten ist. Überraschenderweise hat sich jedoch gezeigt, dass auch im Frequenzbereich von 6 GHz bis 10 GHz, der oberhalb der Grenzfrequenz liegt, so dass Mikrowellenstrahlung in das jeweilige Rohrsystem eingekoppelt wurde, die Spektren qualitativ denselben Verlauf zeigen. Die Spektren unterscheiden sich nur in der Dämpfung, die mit zunehmender Größe des Rohrsystems leicht ansteigt. Das in Figur 2b dargestellte Spektrum des vierten und größten Rohrsystems der Figur 1d weist im Vergleich zu dem in Figur 2a dargestellten Spektrum des ersten und kleinsten Rohrsystems der Figur 1a eine größere Dämpfung auf. Die in dem Rohrsystem der Figur 1d vorhandenen Biegungen, Abzweigungen und Durchmesseränderungen verändern das transmittierte Signal nicht bzw. wirken sich nur in einer leichten Zunahme der Dämpfung aus. Dieses Verhalten wird darauf zurückgeführt, dass auch in den komplexeren Rohrsystemen der Figuren 1b, 1c und 1d der wesentliche Teil der Mikrowellenstrahlung den direkten Weg zwischen den beiden Mikrowellensonden 100 durch das Rohrsystem 10 nimmt, so dass bei den in den vier getesteten Rohrsystemen 10 der Figuren 1a bis 1d im Wesentlichen nur die beiden Rohre 12, die direkt an die Mikrowellensonden 100 angrenzen, sowie der Teil der Biegung 14 bzw. des Verteilers 16, der direkt an die beiden Rohre 12 angrenzt, zu dem empfangen transmittierten Signal beiträgt. Da an dem Verteiler 16 der Rohrsysteme 10 der Figuren 1b, 1c und 1d ein Teil der Mikrowellenstrahlung in die weiteren Rohre 12 bzw. in das Sammelrohr 18 und den Konus 20 gelangt, wird nicht mehr das gesamte Signal zu der zweiten Mikrowellensonde 100 gelangen, so dass die Dämpfung steigt. Die Auswertbarkeit der Messung wird durch diese geringe Zunahme der Dämpfung jedoch nicht beeinträchtigt.

In einer weiteren, nicht in den Figuren dargestellten Untersuchung wurden die Mikrowellensonden nicht über einen Blindflansch 15, sondern jeweils über eine Biegung 14 in das Rohrsystem 10 eingekoppelt, wobei jeweils eine Biegung 14 mit einer Mikrowellensonde 100 einen der Blindflansche 15 mit einer Mikrowellensonde 100 ersetzt hat. Hierbei hat sich gezeigt, dass durch die geometrisch abweichende Umgebung der Sonde bevorzugt die TE11 Mode mit niedriger Grenzfrequenz angeregt wird.

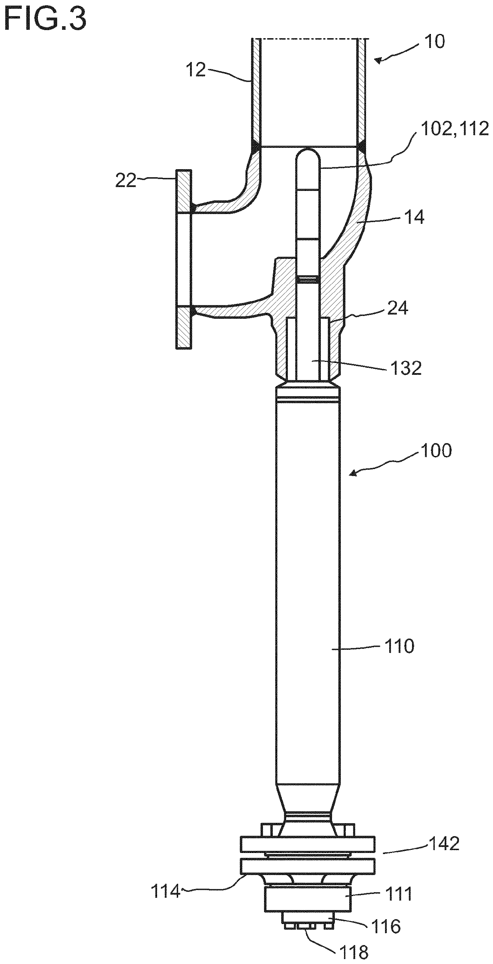

In Figur 3 ist das Einbringen einer Mikrowellensonde 100 gemäß eines ersten Beispiels in ein Rohrsystem 10 dargestellt. Das Rohrsystem 10 ist dabei als Schnitt dargestellt, die Mikrowellensonde 100 ist nicht im Schnitt gezeigt. Der dargestellte Ausschnitt des Rohrsystems 10 zeigt ein Rohr 12, welches über eine Biegung 14 in einen Flansch 22 übergeht. Alternativ kann die Anbindung auch anstelle des Flansches über eine Schweißverbindung realisiert werden. Über den Flansch 22 können weitere Teile des Rohrsystems 10 angebunden werden, die in der Figur 3 nicht dargestellt sind. An der Biegung 14 ist ein Stutzen 24 angeordnet, über den ein Zugang in das Innere des Rohrsystems 10 möglich ist. Über den Stutzen 24 ist eine Mikrowellensonde 100 in das Rohrsystem 10 eingebracht. Alternativ kann die Anbindung auch anstelle des Flansches über eine Schweißverbindung realisiert werden.

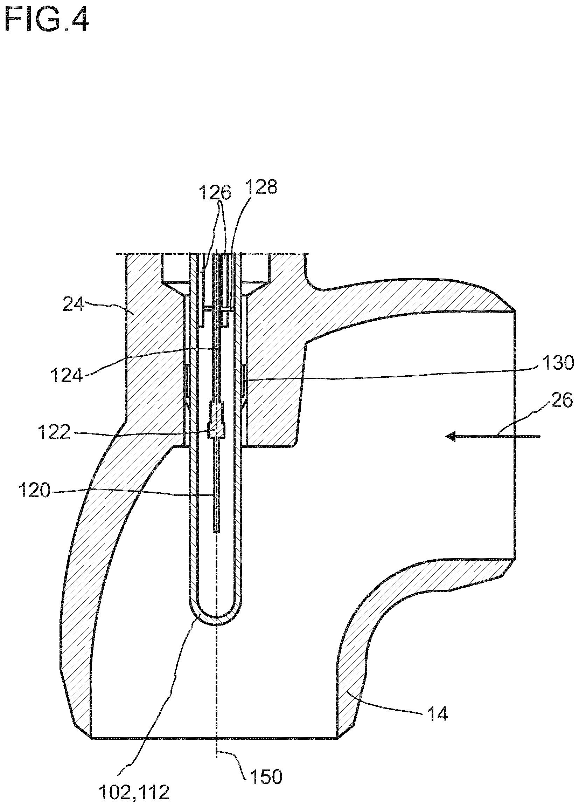

Die Mikrowellensonde 100 umfasst eine als Fenster 102 ausgestaltete Hülle 112, welche eine Mikrowellenantenne, vergleiche Figur 4, umgibt. Das Fenster 102 ragt über den Stutzen 24 in das Innere des Rohrsystems 10 hinein. Das Fenster 102 geht in ein Schutzrohr 132 über, wobei der Teil, der aus dem Stutzen 24 herausragt, von einer Hülse 110 umgeben ist. An die Hülse 110 schließt sich über eine weitere Hülse 111 eine Anschlussplatte 116 an, die einen Anschluss 118 aufweist. Über den Anschluss 118 kann die Mikrowellensonde 100 bzw. die Mikrowellenantenne mit einem Signal beaufschlagt werden bzw. es können empfangene Signale an einen Analysator weitergeleitet werden. Die Anschlussplatte 116 ist über einen Flansch 114 und einen Flansch 142 an der Hülse 110 befestigt. Die Verbindung zwischen der Hülse 110 und dem Stutzen 24 wird beispielsweise durch Schweißen hergestellt.

Figur 4 zeigt eine schematische Darstellung der Spitze der Mikrowellensonde 100 des ersten Beispiels, wobei die Mikrowellensonde 100 in ein Rohrsystem 10 eingebracht ist. Von dem Rohrsystem 10 ist nur ein Ausschnitt mit einer Biegung 14 dargestellt, welche einen Stutzen 24 aufweist. Der Ausschnitt des Rohrsystems 10 ist als Schnitt dargestellt.

Auch die Spitze der Mikrowellensonde 100 ist in der Figur 4 in einer Schnittdarstellung gezeigt.

In der Figur 4 ist das als Hülle 112 ausgestaltete Fenster 102 zu erkennen. Das Fenster 102 ragt in den Innenraum des Rohrsystems 10, wobei die Längsachse 150 der Mikrowellensonde 100 senkrecht zu einer Strömungsrichtung 26 steht, so dass etwa die Hälfte der Oberfläche des Fensters 102 direkt angeströmt wird.

Im Inneren der Hülle 112 ist eine Mikrowellenantenne 120 aufgenommen, welche in der in Figur 4 dargestellten Ausführungsform als Stiftantenne ausgeführt ist. Die Spitze der Mikrowellenantenne 120 weist in Längsrichtung gesehen einen Abstand zur Hülle 112 auf. Der Abstand beträgt mindestens 20 mm.

Die Mikrowellenantenne 120 ist mit einem Koaxialkabel 124 verbunden, wobei an der Verbindungsstelle eine Endkappe 122 an dem Koaxialkabel 124 angeordnet ist. Das Koaxialkabel 124 wird über eine Halteplatte 128 zentriert in der Hülle 112 geführt. Die Halteplatte 128 ist an mehreren, beispielsweise drei Stangen 126 gehalten, wobei in der Schnittdarstellung der Figur 4 zwei Stangen 126 sichtbar sind. Gegebenenfalls können an den Stangen 126 weitere Halteplatten 128 zur Führung des Koaxialkabels 124 angeordnet werden.

Die Mikrowellensonde 100 bzw. deren Hülle 112 ist an dem Stutzen 24 in das Innere des Rohrsystems 10 eingebracht, wobei in dem Stutzen 24 ein Gleitlager 130 angeordnet ist. Dieses bewirkt primär eine Zentrierung der Hülle 112 zur Unterdrückung nachteiliger Vibrationen. Aufgrund der Koksbildung ist zudem davon auszugehen, dass der schmale Ringspalt des Gleitlagers 130 sich sehr schnell schließt und somit den Gasweg zwischen dem Stutzen 24 und der Hülle 112 abdichtet, so dass möglichst wenig in dem Innenraum des Rohrsystems 10 strömendes kondensierbares Fluid nach außen gelangt. Gleichzeitig erlaubt das Gleitlager 130 eine Bewegung der Mikrowellensonde 100 entlang ihrer Längsachse 150.

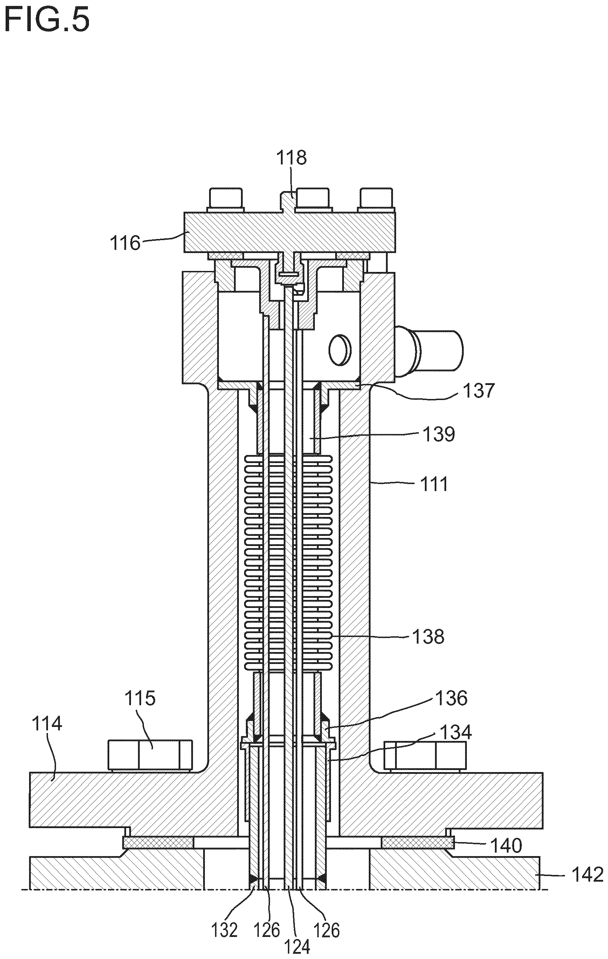

Figur 5 zeigt eine schematische Darstellung der Anschlussseite der Mikrowellensonde 100 des ersten Beispiels.

Die Anschlussseite liegt entgegengesetzt von der Seite, an der die Mikrowellenantenne 120 angeordnet ist und weist eine Anschlussplatte 116 auf. Das Koaxialkabel 124 ist durch die Anschlussplatte 116 zu einem Anschluss 118 geführt. Bei dem Anschluss 118 handelt es sich beispielsweise um einen in der Hochfrequenztechnik verwendeten Konnektor wie beispielsweise einen SMA-Konnektor, einen APC7 Konnektor oder einen N-Konnektor. Die Anschlussplatte 116 geht in Richtung der Mikrowellenantenne 120 in eine weitere Hülse 111 über. Im Inneren der weiteren Hülse 111 ist ein Längenausgleichselement 138 aufgenommen, welches sich an einer Seite mit der Hülse 111 verschweißt ist und an seiner anderen Seite in das Schutzrohr 132 übergeht. Dazu ist an der Hülse 111 ein Ring 137 befestigt, der mit einem Anschlussstück 139 des Längenausgleichselements 138 verbunden ist.

Die weitere Hülse 111 endet in einem Flansch 114. Über den Flansch 114 und den an der Hülse 110 angeordneten Flansch 142 sind die Hülse 110 und die weitere Hülse 111 miteinander verbunden, wobei zwischen dem Flansch 114 und dem Flansch 142 eine Dichtung 140 eingesetzt ist. Zur Verbindung der Flansche 114 und 142 werden mehrere Bolzen 115 eingesetzt. An dem Übergang zwischen dem Schutzrohr 132 und dem Längenausgleichselement 138 ist an dem Schutzrohr 132 ein Verbindungsrohr 134 befestigt und an dem Längenausgleichselement 138 ist ein Ring 136 angeordnet. Durch Schweißen sind das Verbindungsrohr 134 und der Ring 136 miteinander verbunden. Entsprechend ist am Übergang zwischen dem Längenausgleichselement 138 und der Anschlussplatte 116 an dem Längenausgleichselement 138 ein Verbindungsrohr angeordnet, welches durch Schweißen an einem Ring 137 befestigt ist, der wiederum durch Schweißen an der Hülse 110 befestigt ist.

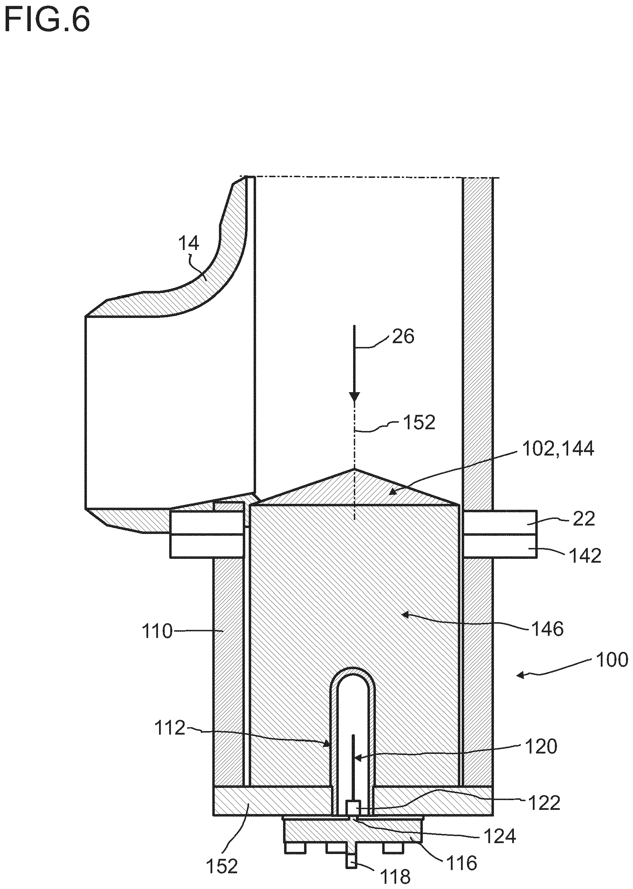

In Figur 6 ist ein zweites Beispiel einer Mikrowellensonde 100 schematisch dargestellt.

Die Figur 6 zeigt die Mikrowellensonde 100 und einen Ausschnitt des Rohrsystems 10 in einer Schnittdarstellung. Von dem Rohrsystem 10 ist nur eine Biegung 14 dargestellt, an deren Enden sich weitere, nicht dargestellte, Teile des Rohrsystems 10 anschließen.

Die Mikrowellensonde 100 weist eine Hülse 110 auf, die an einer Seite eine Öffnung zur Verbindung mit dem Rohrsystem 10 aufweist und an ihrer anderen, entgegengesetzten Seite mit einer Abschlussplatte 152 verschlossen ist. Durch die Abschlussplatte 152 ist eine Mikrowellenantenne 120 geführt, die als Stiftantenne ausgeführt ist und von einer Hülle 112 umgeben ist. Die Hülle 112 und die Mikrowellenantenne 120 sind konzentrisch zur Hülse 110 angeordnet und ragen in das Innere der Hülse 110 hinein, nicht jedoch in das Rohrsystem 10.

An die Hülle 112 schließt sich auf der Außenseite der Abschlussplatte 152 eine Anschlussplatte 116 an, die über mehrere Bolzen 115 an der Abschlussplatte 152 befestigt ist und einen Anschluss 118 aufweist. Durch die Anschlussplatte 116 ist ein Koaxialkabel 124 geführt, welches mit einer Endkappe 122 abgeschlossen ist und in die Mikrowellenantenne 120 übergeht. Das Koaxialkabel 124 ist mit dem Anschluss 118 verbunden und ermöglicht eine Beaufschlagung der Mikrowellenantenne 120 mit einem Signal und umgekehrt das Weiterleiten eines von der Mikrowellenantenne 120 empfangen Signals zu einem Analysator.

Der nicht durch die Hülle 112 ausgefüllte Innenraum der Hülse 110 ist von einem Verdrängungskörper 146 eingenommen, der in Richtung des Rohrsystems 10 mit einer Kappe 144 versehen ist. Der Verdrängungskörper 146 und die Kappe 144 sind beide jeweils aus für Mikrowellenstrahlung transparenten Materialien aufgebaut und bilden zusammen das Fenster 102 aus. Auch die Hülle 112 ist aus für Mikrowellen transparenten Materialien aufgebaut. Die Kappe 144 ist konisch geformt, wobei die Spitze der so gebildeten Kegelform auf der Längsachse 152 der Mikrowellensonde 100 liegt. Alternativ kann die Kappe 144 auch als Keil ausgestaltet werden, wobei der Keil so angeordnet ist, dass die durch die Keilform gebildete schräge Fläche von dem Fluid angeströmt wird.

Die Hülse 110 weist an der dem Rohrsystem 10 zugewandten Seite einen Flansch 142 auf. An der Biegung 14 des Rohrsystems 10 ist ein Flansch 22 angeordnet, so dass über die Flansche 142 und 22 die Mikrowellensonde 100 mit dem Rohrsystem 10 verbunden werden kann. Alternativ kann die Hülse 110 mit dem Rohrsystem 10 mittels Schweißen verbunden werden.

Die Hülse 110 ist wie das Rohrsystem 10 aus einem elektrisch leitfähigen Material gefertigt, so dass sowohl das Rohrsystem 10 als auch die Hülse 110 als Hohlleiter für Mikrowellen geeignet sind. Der Innendurchmesser der Hülse 110 entspricht dem Innendurchmesser des Rohrsystems 10.

Nach dem Verbinden ist die Mikrowellensonde 100 derart angeordnet, dass eine Strömung 26 eines in dem Rohrsystem 10 geführten Fluids das kegelförmige Fenster 102 senkrecht zur Längsachse 152 der Mikrowellensonde 100 beströmt.

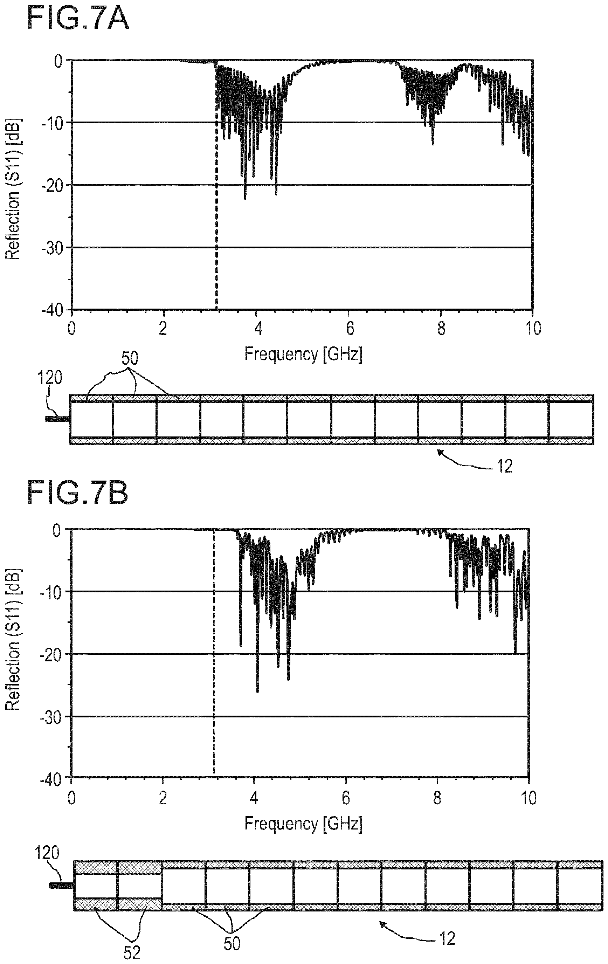

Figuren 7a bis 7c zeigen Reflexionsmessungen an einem Modellsystem im Frequenzraum. Das Modellsystem besteht aus einem Rohr 12 mit einem Innendurchmesser von 107,1 mm und einer Länge von 1071 mm. Das Verhältnis von Durchmesser zur Länge von 1:10 wurde so gewählt, dass das Messergebnis nicht mehr von der Länge des Rohres 12 abhängig ist, das heißt die erhaltenen Ergebnisse treffen auch auf längere Rohre zu. In das Rohr wurden Graphiteinsätze 50, 52 eingesetzt, um kohlenstoffhaltige Ablagerungen zu simulieren. Jeder Einsatz weist eine Länge von 89 mm auf, so dass 12 Einsätze in dem Rohr aufgenommen wurden. Bei den Versuchen wurden Einsätze mit zwei verschiedenen Innendurchmessern verwendet, wobei der Außendurchmesser jeweils 106,85 mm betrug. Bei den großen Einsätzen 52 betrug der Innendurchmesser 64,11 mm, bei den kleinen Einsätzen 50 betrug der Innendurchmesser 74,8 mm.

An einem Ende des Rohres 12 wurde eine Mikrowellenantenne 120 in Form einer Stiftantenne in das Rohr 12 eingesetzt, wobei die Stiftantenne konzentrisch in dem Rohr 12 angeordnet wurde. Zur Durchführung der Messungen wurden mit einem Netzwerkanalysator vom Typ Agilent E5071 C Reflexionsspektren im Bereich von 300 kHz bis 10 GHz aufgenommen. Dabei wurde für jede gemessene Frequenz ein zeitlich begrenztes Mikrowellensignal mit dieser Frequenz ausgesendet und anschließend wieder über dieselbe Mikrowellenantenne 120 empfangen.

In dem in Figur 7a dargestellten Versuch ist das Rohr 12 vollständig mit kleinen Einsätzen 50 bestückt. An der mit (1) bezeichneten Position in dem Spektrum ist die Grenzfrequenz des Rohres 12 mit den kleinen Einsätzen 50 bei etwa 3,2 GHz zu erkennen. Die in den Figuren 7a bis 7c eingezeichnete gestrichelte Linie kennzeichnet die Grenzfrequenz des Rohrsystems 12 mit den kleinen Einsätzen 50.

In dem in Figur 7b dargestellten Versuch wurden die beiden am dichtesten an der Mikrowellenantenne 120 gelegenen kleinen Einsätze 50 durch große Einsätze 52 ersetzt und es wurde ein weiteres Reflexionsspektrum gemessen. Wie der Darstellung des Spektrums in der Figur 7b zu entnehmen ist, wird durch die mit den großen Einsätzen 52 verursachte Verengung die Grenzfrequenz zu höheren Frequenzen verschoben. Diese Verschiebung weist auf eine Einengung hin. Die Grenzfrequenz verschiebt sich auf etwa 3,7 GHz, was der für die Durchmesseränderung erwarteten Änderung entspricht.

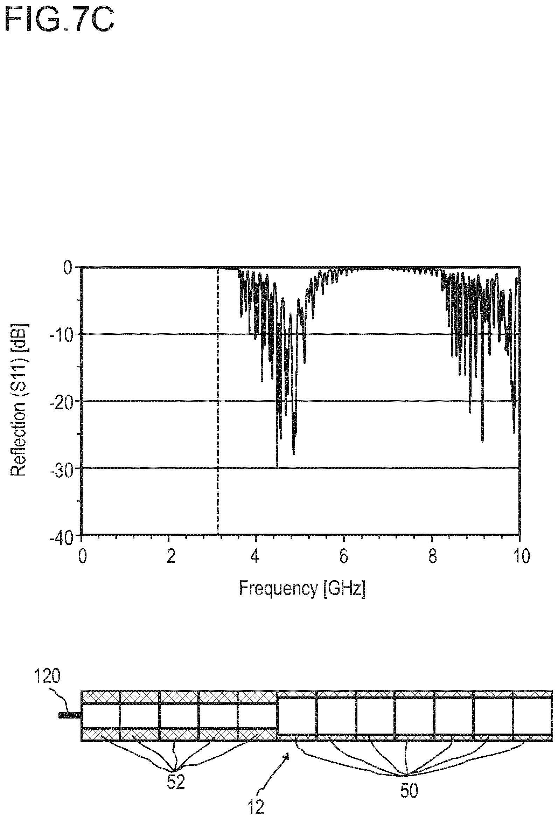

In dem in Figur 7c dargestellten Versuch wurden die fünf am dichtesten an der Mikrowellenantenne 120 gelegenen kleinen Einsätze 50 durch große Einsätze 52 ersetzt und es wurde ein weiteres Reflexionsspektrum gemessen. Wie der Darstellung des Spektrums in der Figur 7c zu entnehmen ist, kommt es gegenüber der mit Bezug zu Figur 7b dargestellten Messung zu keiner weiteren Veränderung der Grenzfrequenz. Eine weitere Veränderung ist auch nicht zu erwarten, da die Grenzfrequenz durch den kleinsten freien Rohrquerschnitt gegeben ist.

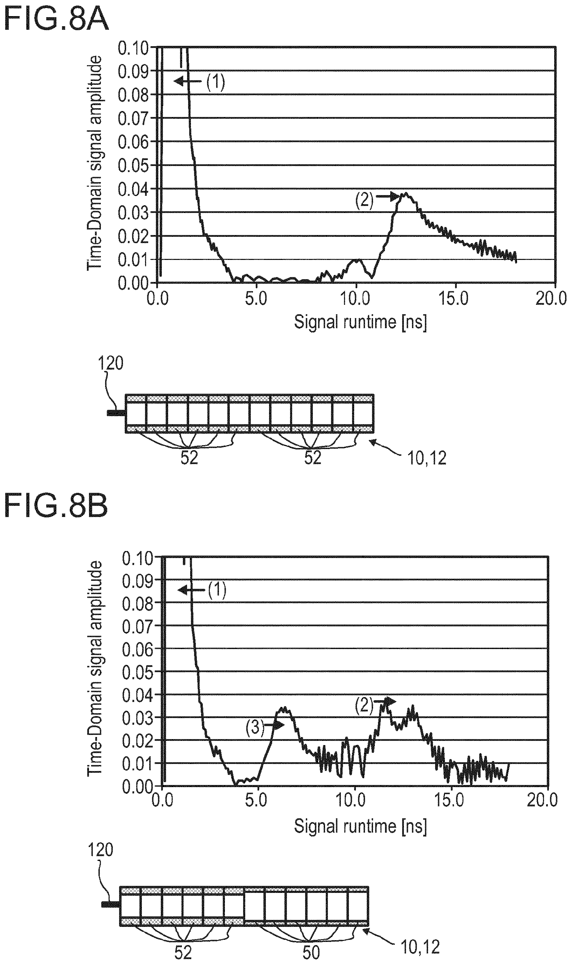

Figuren 8a bis 8c zeigen Reflexionsmessungen an einem Modellsystem im Zeitraum. Das Modellsystem besteht aus einem Rohr 12 mit einem Innendurchmesser von 107,1 mm und einer Länge von 1071 mm. Das Verhältnis von Durchmesser zur Länge von 1:10 wurde so gewählt, dass das Messergebnis nicht mehr von der Länge des Rohres 12 abhängig ist, das heißt die erhaltenen Ergebnisse treffen auch auf längere Rohre zu. In das Rohr 12 wurden Graphiteinsätze eingesetzt, um kohlenstoffhaltige Ablagerungen zu simulieren. Jeder Einsatz weist eine Länge von 89 mm auf, so dass 12 Einsätze in dem Rohr aufgenommen wurden. Bei den Versuchen wurden Einsätze mit zwei verschiedenen Innendurchmessern verwendet, wobei der Außendurchmesser jeweils 106,85 mm betrug. Bei den großen Einsätzen 52 betrug der Innendurchmesser 64,11 mm, bei den kleinen Einsätzen 50 betrug der Innendurchmesser 74,8 mm.

An einem Ende des Rohres 12 wurde eine Mikrowellenantenne 120 in Form einer Stiftantenne in das Rohr 12 eingesetzt. Zur Durchführung der Messungen wurden mit einem Netzwerkanalysator vom Typ Agilent E5071 C Reflexionsspektren für Mikrowellenpulse aufgenommen, die mit der Mikrowellenantenne 120 in das Rohr eingekoppelt und deren Reflexionen anschließend durch die gleiche Mikrowellenantenne wieder empfangen wurden. In den Figuren 8a bis 8c ist jeweils die Signalamplitude in willkürlichen Einheiten gegen die Signallaufzeit in ns aufgetragen.

Bei der in Figur 8a dargestellten Messung war das Rohr 12 vollständig mit großen Einsätzen 52 bestückt. In der dargestellten Messkurve gibt es zwei Maxima. Ein erstes Maximum, welches mit (1) markiert ist, ist der Reflexion am Übergang von der Antenne zum Rohr zuzuordnen. Dies deutet auf eine direkte Reflexion der Mikrowellen im Bereich der Mikrowellenantenne 120 hin. Ein zweites Maximum, welches mit (2) markiert ist, entsteht durch die Reflexion der Mikrowellen am offenen Ende des Rohres 12.

Bei der in Figur 8b dargestellten Messung war das Rohr 12 zur Hälfte mit großen Einsätzen 52 bestückt. Die der Mikrowellenantenne 120 abgewandte Seite des Rohrs 12 wurde mit kleinen Einsätzen 50 bestückt. In der dargestellten Messkurve gibt es drei Maxima. Die mit (1) und (2) markierten Maxima entsprechen wie mit Bezug zur Figur 8a beschrieben der direkten Reflexion bei der Einkopplung an der Mikrowellenantenne 120 und der Reflexion am offenen Ende des Rohrs 12. Das mit (3) markierte dritte Maximum entspricht der Reflexion am Übergang von den großen Einsätzen 52 zu den kleinen Einsätzen 50. Über die Signallaufzeit lässt sich die Position dieses Übergangs in dem Rohr 12 lokalisieren und liegt hier genau in der Mitte des Rohrs 12.

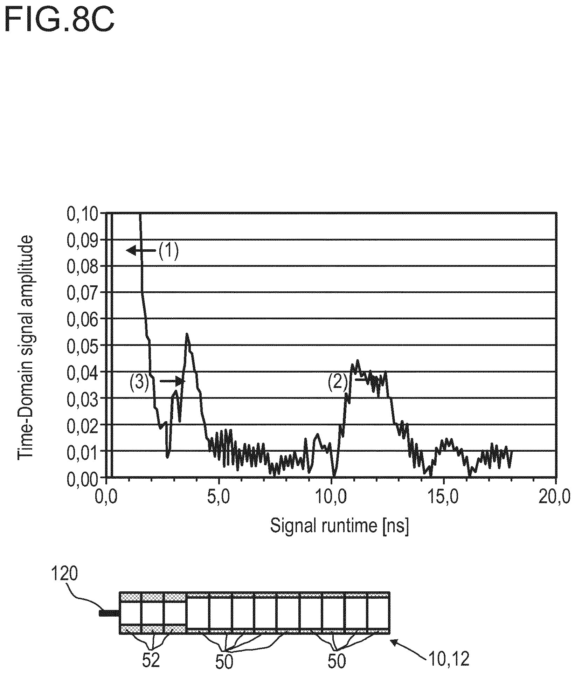

Bei der in Figur 8c dargestellten Messung war das Rohr 12 zu einem Viertel mit großen Einsätzen 52 bestückt. Die der Mikrowellenantenne 120 abgewandte Seite des Rohrs 12 wurde mit kleinen Einsätzen 50 bestückt. Wie mit Bezug zur Figur 8b beschrieben ergibt sich eine Messkurve mit drei Maxima, wobei die Position des dritten Maximums (3), welches der Reflexion an der Übergangsstelle von den großen Einsätzen 52 zu den kleinen Einsätzen 50 entspricht, verschoben ist. Die Verschiebung entspricht exakt dem veränderten Abstand des Übergangs zur Mikrowellenantenne 120.

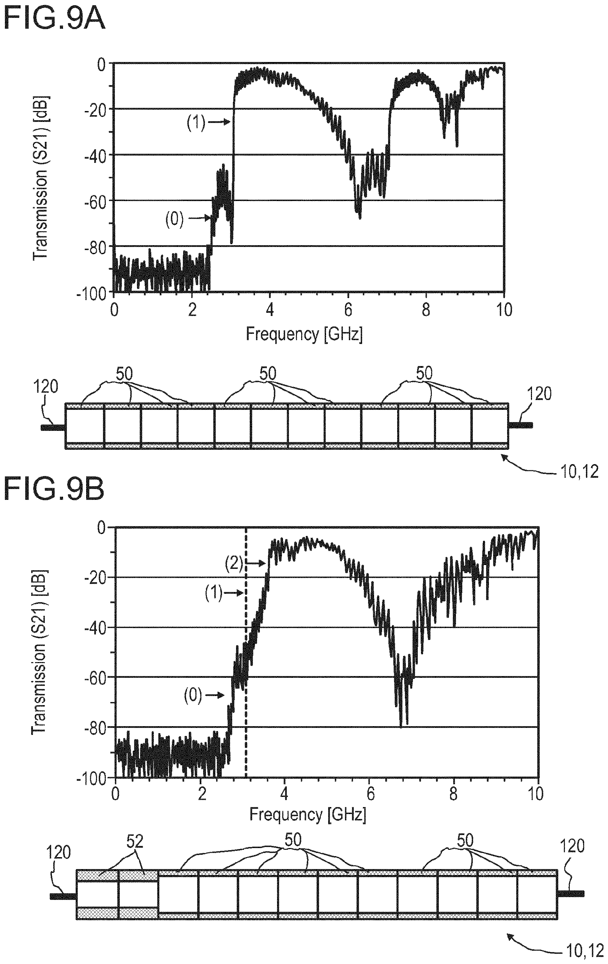

In den Figuren 9a bis 9c sind Transmissionsmessungen an einem Modellsystem im Frequenzraum dargestellt. Das Modellsystem besteht wie mit Bezug zu den Figuren 7 und 8 beschrieben aus einem Rohr 12 mit einem Innendurchmesser von 107,1 mm und einer Länge von 1071 mm. Das Verhältnis von Durchmesser zur Länge von 1:10 wurde so gewählt, dass das Messergebnis nicht mehr von der Länge des Rohres 12 abhängig ist, das heißt die erhaltenen Ergebnisse treffen auch auf längere Rohre zu. In das Rohr wurden Graphiteinsätze eingesetzt, um kohlenstoffhaltige Ablagerungen zu simulieren. Jeder Einsatz weist eine Länge von 89 mm auf, so dass 12 Einsätze in dem Rohr 12 aufgenommen wurden. Bei den Versuchen wurden Einsätze mit zwei verschiedenen Innendurchmessern verwendet, wobei der Außendurchmesser jeweils 106,85 mm betrug. Bei den großen Einsätzen 52 betrug der Innendurchmesser 64,11 mm, bei den kleinen Einsätzen 50 betrug der Innendurchmesser 74,8 mm.

An beiden Enden des Rohres 12 wurde jeweils eine Mikrowellenantenne 120 in Form einer Stiftantenne in das Rohr 12 eingesetzt. Zur Durchführung der Messungen wurden mit einem Netzwerkanalysator vom Typ Agilent E5071 C Transmissionsspektren im Bereich von 300 kHz bis 10 GHz aufgenommen. Dabei wurde für jede gemessene Frequenz ein Mikrowellensignal mit dieser Frequenz durch eine Mikrowellenantenne ausgesendet und anschließend wieder über die andere Mikrowellenantenne 120 empfangen.

In der Messung der Figur 9a sind zwölf kleine Einsätze 50 in das Rohr 12 eingesetzt. In dem dargestellten Transmissionsspektrum sind zwei Grenzfrequenzen zu erkennen, die jeweils mit (0) und (1) markiert sind. Die Position (0) markiert die Grenzfrequenz der TE11 Schwingungsmode und die Position (1) markiert die Grenzfrequenz der TM01 Schwingungsmode. Deutlich zu erkennen ist, dass die Amplitude der TM01 Schwingungsmode wesentlich größer als die der TE11 Schwingungsmode ist. Dies ist darin begründet, dass durch die gewählte Anordnung der Mikrowellenantenne die TE11 Schwingungsmode nur schwach angeregt werden kann.

In der Messung der Figur 9b wurden zwei direkt an eine der Mikrowellenantennen 120 angrenzende kleine Einsätze 50 durch große Einsätze 52 ersetzt. In dem dargestellten Transmissionsspektrum ist zu erkennen, dass sich die Grenzfrequzenzen verschoben haben. Die verschobene Grenzfrequenz der TM01 Schwingungsmode wurde mit (2) markiert.

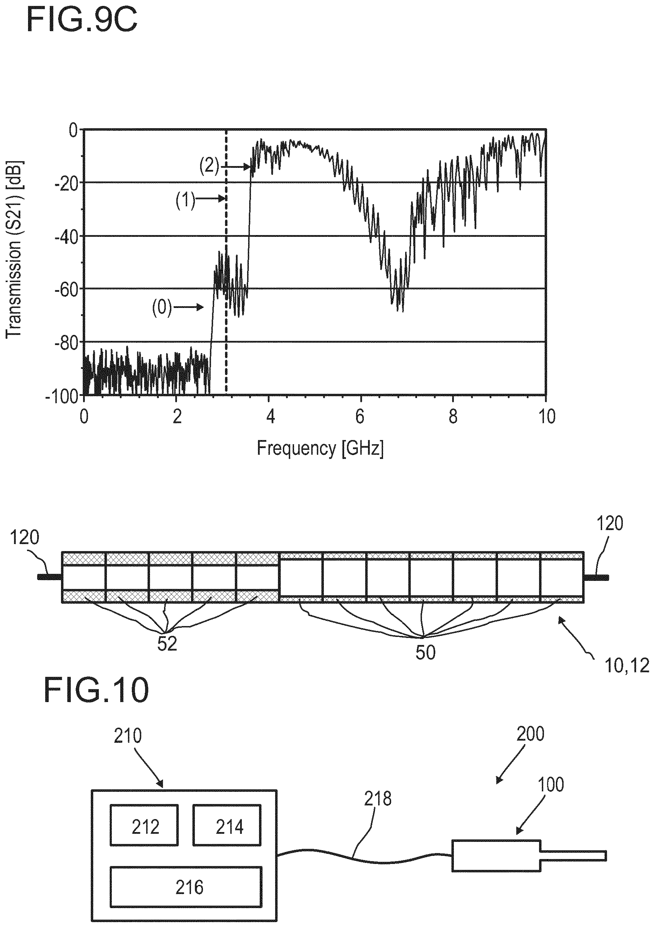

In dem in Figur 9c dargestellten Versuch wurden die fünf am dichtesten an der linken Mikrowellenantenne 120 gelegenen kleinen Einsätze 50 durch große Einsätze 52 ersetzt und es wurde ein weiteres Transmissionsspektrum gemessen. In dem dargestellten Transmissionsspektrum ist zu erkennen, dass sich die Grenzfrequzenzen nicht mehr weiter verschoben haben, lediglich der Schärfe des Übergangs, also die Steigung in dem Spektrum, hat zugenommen.

In Figur 10 ist ein Messsystem 200 schematisch dargestellt.

Das Messsystem 200 umfasst einen Netzwerkanalysator, der wiederum einen Mikrowellengenerator 212, einen Mikrowellenempfänger 214 und einen Analysator 216 umfasst. Der Mikrowellengenerator 212 dient als Signalgenerator und erzeugt Mikrowellensignale mit einer gewünschten Amplitude und Frequenz. Der Mikrowellenempfänger 214 umfasst Filter und Vorverstärker sowie einen Analog/Digitalwandler. Der Mikrowellenempfänger 214 bereitet empfangene Signale für eine spätere elektronische Weiterverarbeitung auf. Diese Weiterverarbeitung wird durch den Analysator 216 durchgeführt, der auch den Ablauf der Messung steuert.

Der Netzwerkanalysator 210 ist über ein Kabel 218 mit einer Mikrowellensonde 100 verbunden, die für die Ausführung der vorgeschlagenen Messverfahren in ein Rohrsystem eines Apparats eingebracht wird. In weiteren Ausführungsformen umfasst das System mehrere Mikrowellensonden 100, insbesondere zwei Mikrowellensonden 100. Bei Verwendung von mindestens zwei Mikrowellensonden 100 lassen sich zusätzlich zu Reflexionsmessungen, für die eine einzige Mikrowellensonde 100 ausreichend ist, auch Transmissionsmessungen durchführen.

### Bezugszeichenliste

- 10: Rohrsystem
- 12: Rohr
- 14: Biegung
- 15: Blindflansch
- 16: Sammelrohr
- 18: Rohr mit großem Durchmesser
- 20: Konus
- 22: Flansch (Rohrsystem)
- 24: Zugangsstutzen
- 26: Strömung
- 50: dünnwandiger Graphiteinsatz
- 52: dickwandiger Graphiteinsatz
- 100: Mikrowellensonde
- 102: Fenster
- 110: Hülse
- 111: Hülse
- 112: Hülle
- 114: Flansch
- 115: Bolzen
- 116: Anschlussplatte
- 118: Anschluss
- 120: Antenne
- 122: Endkappe
- 124: Koaxialkabel
- 126: Stange
- 128: Halteplatte
- 130: Gleitlager
- 132: Schutzrohr
- 134: Verbindungsrohr
- 136: Ring
- 137: Ring
- 138: Längenausgleichselement
- 139: Anschlussstück
- 140: Dichtung
- 142: Flansch
- 144: Kappe
- 146: Verdrängungskörper
- 150: Längsachse
- 152: Abschlussplatte
- 200: Messsystem
- 210: Netzwerkanalysator
- 212: Mikrowellengenerator
- 214: Mikrowellenempfang
- 216: Analysator
- 218: Kabel

## Patentansprüche

1. Verfahren zum Erkennen von Ablagerungen in einem Rohrsystem (10) eines Apparats, der von einem Fluid durchströmt wird, **dadurch gekennzeichnet, dass** mindestens eine Mikrowellensonde (100) in das Rohrsystem (10) derart eingebracht wird, dass ein für Mikrowellenstrahlung transparentes Fenster (102) der Mikrowellensonde (100) von dem Fluid angeströmt wird, und dass über die mindestens eine Mikrowellensonde (100) durch das für die Mikrowellenstrahlung transparente Fenster Mikrowellen in das Rohrsystem (10) eingekoppelt werden, wobei sich die in das Rohrsystem (10) eingekoppelten Mikrowellen in dem Rohrsystem (10) wie in einem Hohlleiter ausbreiten, wobei
a.) eine Reflexionsmessung durchgeführt wird, bei der Reflexionen der von der mindestens einen Mikrowellensonde (100) abgestrahlten Mikrowellen durch die jeweilige Mikrowellensonde (100) wieder empfangen werden, wobei Grenzfrequenzen bestimmt werden, wobei für das Bestimmen der Grenzfrequenzen die Frequenz der in das Rohrsystem (10) eingekoppelten Mikrowellen in einem vorgegebenen Bereich variiert wird und zu jeder Frequenz die Intensität der reflektierten Mikrowellenstrahlung bestimmt wird, und aus einem Vergleich mit einer Referenz oder einer vorherigen Messung auf eine Verengung in der Umgebung der Mikrowellensonde (100) geschlossen wird, wobei auf Verengungen hinweisende Grenzfrequenzen erkannt werden und wobei der freie Querschnitt an der Verengung aus dieser auf eine Verengung hinweisenden Grenzfrequenz bestimmt wird, und/oder
b.) mindestens zwei Mikrowellensonden (100) voneinander beabstandet in das Rohrsystem eingebracht werden und eine Transmissionsmessung zwischen zwei Mikrowellensonden (100) durchgeführt wird, wobei die Anordnung der beiden Mikrowellensonden (100) einen Rohrsystemabschnitt definiert, Grenzfrequenzen des Rohrsystemabschnitts bestimmt werden, wobei für das Bestimmen der Grenzfrequenzen die Frequenz der in das Rohrsystem (10) eingekoppelten Mikrowellen in einem vorgegebenen Bereich variiert wird und zu jeder Frequenz die Intensität der reflektierten Mikrowellenstrahlung bestimmt wird, und über einen Vergleich mit einer Referenz oder einer vorherigen Messung auf eine Verengung im Rohrsystemabschnitt geschlossen wird, wobei auf Verengungen hinweisende Grenzfrequenzen erkannt werden und wobei der freie Querschnitt an der Verengung aus dieser auf eine Verengung hinweisenden Grenzfrequenz bestimmt wird, wobei aus dem Erkennen einer Verengung auf das Vorhandensein von Ablagerungen geschlossen wird.

2. Verfahren gemäß Anspruch 1, **dadurch gekennzeichnet, dass** das Rohrsystem (10) mindestens einen Bereich veränderten Querschnitts, eine Verzweigung und/oder eine Krümmung aufweist.

3. Verfahren nach Anspruch 1 oder 2, **dadurch gekennzeichnet, dass** bei der Transmissionsmessung gemäß Variante b) zusätzlich die Amplitude gemessen wird, wobei eine Veränderung der Amplitude auf eine Engstelle hinweist.

4. Verfahren nach einem der Ansprüche 1 bis 3, wobei die Messungen fortlaufend während des Betriebs des Apparats durchgeführt werden und eine zeitliche Änderung der gemessenen Parameter bestimmt wird, **dadurch gekennzeichnet, dass** die Betriebsbedingungen des Apparats variiert werden, wobei bei einer Beschleunigung der zeitlichen Änderung auf ungünstige Betriebsbedingungen geschlossen wird und bei einer Verlangsamung der zeitlichen Änderung auf günstige Betriebsbedingungen geschlossen wird.

5. Verfahren nach einem der Ansprüche 1 bis 4, **dadurch gekennzeichnet, dass** Referenzwerte für das Rohrsystem (10) des Apparats an einem Modell bestimmt werden, die Referenzwerte auf die Größe des Apparats skaliert werden und bei Durchführen einer Messung die Messergebnisse mit den Referenzwerten verglichen werden, wobei das Modell ein Computermodell oder ein in einem verkleinerten Maßstab aufgebautes Modell des Rohrsystems (10) ist.

6. Verfahren gemäß einem der Ansprüche 1 bis 5, **dadurch gekennzeichnet, dass** an Verbindungsstellen des Rohrsystems (10) eine Abschirmung angeordnet wird.

7. Verfahren gemäß einem der Ansprüche 1 bis 6, **dadurch gekennzeichnet, dass** das Rohrsystem (10) mindestens einen gekrümmten Bereich aufweist, wobei die mindestens eine Mikrowellensonde (100) an dem gekrümmten Bereich in das Rohrsystem (10) eingebracht wird.

## Claims

1. A method for detecting deposits in a pipe system (10) of an apparatus that is flowed through by a fluid, wherein at least one microwave probe (100) is introduced into the pipe system (10) in such a way that the fluid flows against a window (102) of the microwave probe (100) that is transparent to microwave radiation, and wherein microwaves are coupled into the pipe system (10) by way of the at least one microwave probe (100) through the window that is transparent to the microwave radiation, the microwaves coupled into the pipe system (10) propagating in the same way in the pipe system (10) as in a hollow conductor, wherein
a.) a reflection measurement is carried out, in which reflections of the microwaves radiated by the at least one microwave probe (100) are received again by the respective microwave probe (100), cut-off frequencies being determined, for determining the cut-off frequencies the frequency of the microwaves coupled into the pipe system (10) being varied in a preset region and the intensity of the reflected microwave radiation determined for each frequency and a comparison with a reference or a previous measurement being used to deduce a constriction in the surrounding area of the microwave probe (100), cut-off frequencies indicative of constrictions being detected and the free cross section at the constriction being determined from this cut-off frequency indicative of a constriction, and/or
b.) at least two microwave probes (100) are introduced into the pipe system at a distance from one another and a transmission measurement between two microwave probes (100) is carried out, the arrangement of the two microwave probes (100) defining a pipe system segment, cut-off frequencies of the pipe system segment being determined, for determining the cut-off frequencies the frequency of the microwaves coupled into the pipe system (10) being varied in a preset region and the intensity of the reflected microwave radiation determined for each frequency and a comparison with a reference or a previous measurement being used to deduce a constriction in the pipe system segment, cut-off frequencies indicative of constrictions being detected and the free cross section at the constriction being determined from this cut-off frequency indicative of a constriction,
wherein the detection of a constriction is used to deduce the presence of deposits.

2. The method according to claim 1, wherein the pipe system (10) comprises at least one region of changed cross section, a branch and/or a curve.

3. The method according to claim 1 or 2, wherein, in the case of the transmission measurement according to variant b), the amplitude is additionally measured, a change in the amplitude indicating a narrowing.

4. The method according to one of claims 1 to 3, the measurements being carried out continuously during the operation of the apparatus and a change over time in the measured parameters being determined, wherein the operating conditions of the apparatus are varied, a speeding up of the change over time being taken to mean unfavorable operating conditions and a slowing down of the change over time being taken to mean favorable operating conditions.

5. The method according to one of claims 1 to 4, wherein reference values for the pipe system (10) of the apparatus are determined on a model, the reference values are scaled up to the size of the apparatus and, when carrying out a measurement, the measurement results are compared with the reference values, the model being a computer model or a reduced scale model of the pipe system (10).

6. The method according to one of claims 1 to 5, wherein a shielding is arranged at connecting points of the pipe system (10).

7. The method according to one of claims 1 to 6, wherein the pipe system (10) has at least one curved region, the at least one microwave probe (100) being introduced into the pipe system (10) at the curved region.

## Revendications

1. Procédé de détection de dépôts dans un système de tubes (10) d'un appareil à travers lequel s'écoule un fluide,
**caractérisé en ce qu'**au moins une sonde micro-ondes (100) est introduite dans le système de tubes (10) de manière à ce que le fluide s'écoule par une fenêtre (102) de la sonde micro-ondes (100) qui est transparente au rayonnement micro-ondes, et **en ce que** des micro-ondes sont injectées par couplage, par le biais de l'au moins une sonde micro-ondes (100), dans le système de tubes (10) par la fenêtre qui est transparente au rayonnement micro-ondes, les micro-ondes, injectées par couplage dans le système de tubes (10), se propageant dans le système de tubes (10) comme dans un guide d'ondes,
a.)une mesure de réflexion étant effectuée dans laquelle des réflexions des micro-ondes, rayonnées par l'au moins une sonde micro-ondes (100), sont à nouveau reçues par la sonde micro-ondes respective (100),
des fréquences limites étant déterminées, la détermination des fréquences limites étant effectuée par variation de la fréquence des micro-ondes, injectées par couplage dans le système de tubes (10), dans une plage spécifiée et par détermination de l'intensité du rayonnement micro-onde réfléchi pour chaque fréquence, et par comparaison avec une référence ou une mesure précédente qui indique un rétrécissement au voisinage de la sonde micro-ondes (100), des fréquences limites étant détectées qui indiquent des rétrécissements et la section transversale libre au niveau du rétrécissement étant déterminée à partir de cette fréquence limite qui indique un rétrécissement, et/ou
b.)au moins deux sondes micro-ondes (100) étant introduites dans le système de tubes à distance l'une de l'autre et une mesure de transmission étant effectuée entre deux sondes micro-ondes (100), la disposition des deux sondes micro-ondes (100) définissant une portion de système de tubes, des fréquences limites de la portion de système de tubes étant déterminées, la détermination des fréquences limites étant effectuée par variation de la fréquence des micro-ondes, injectées par couplage dans le système de tubes (10), dans une plage spécifiée et par détermination de l'intensité du rayonnement micro-onde réfléchi pour chaque fréquence, et par comparaison avec une référence ou une mesure précédente qui indique un rétrécissement au voisinage de la sonde micro-ondes, des fréquences limites étant détectées qui indiquent des rétrécissements et la section transversale libre au niveau du rétrécissement étant déterminée à partir de cette fréquence limite qui indique un rétrécissement,
la présence de dépôts étant déduite de la détection d'un rétrécissement.

2. Procédé selon la revendication 1, **caractérisé en ce que** le système de tubes (10) comporte au moins une zone ayant une section transversale modifiée, une dérivation et/ou une incurvation.

3. Procédé selon la revendication 1 ou 2, **caractérisé en ce que**, lors de la mesure de transmission selon la variante b), l'amplitude est également mesurée, une variation de l'amplitude indiquant un rétrécissement.

4. Procédé selon l'une des revendications 1 à 3, les mesures étant effectuées en continu pendant le fonctionnement de l'appareil et une variation dans le temps des paramètres mesurés étant déterminée, **caractérisé en ce qu'**une variation des conditions de fonctionnement de l'appareil est effectuée, une accélération de la variation dans le temps permettant de conclure à des conditions de fonctionnement défavorables et un ralentissement de la variation dans le temps permettant de conclure à des conditions de fonctionnement favorables.

5. Procédé selon l'une des revendications 1 à 4, **caractérisé en ce que** des valeurs de référence pour le système de tubes (10) de l'appareil sont déterminées sur un modèle, les valeurs de référence sont cadrées sur la dimension de l'appareil et les résultats de mesure sont comparés aux valeurs de référence lorsqu'une mesure est effectuée, le modèle étant un modèle informatique ou un modèle à échelle réduite du système de tubes (10).

6. Procédé selon l'une des revendications 1 à 5, **caractérisé en ce qu'**un écran est disposé aux points de liaison du système de tubes (10).

7. Procédé selon l'une des revendications 1 à 6, **caractérisé en ce que** le système de tubes (10) comporte au moins une zone incurvée, l'au moins une sonde micro-onde (100) étant introduite dans le système de tubes (10) au niveau de la zone incurvée.
